(19) Europäisches Patentamt
European Patent Office
Office européen des brevets

(11) **EP 3 359 983 B1**

(12) **EUROPEAN PATENT SPECIFICATION**

(45) Date of publication and mention
of the grant of the patent:
**04.05.2022 Bulletin 2022/18**

(21) Application number: **16854183.7**

(22) Date of filing: **05.10.2016**

(51) International Patent Classification (IPC):
*G01V 1/36* (2006.01)  *G01V 1/34* (2006.01)
*G01V 1/30* (2006.01)

(52) Cooperative Patent Classification (CPC):
**G01V 1/364;** G01V 2210/32; G01V 2210/324

(86) International application number:
**PCT/US2016/055392**

(87) International publication number:
**WO 2017/062390 (13.04.2017 Gazette 2017/15)**

(54) **SEISMIC POLYNOMIAL FILTER**

SEISMISCHER POLYNOMFILTER

FILTRE POLYNOMIAL SISMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.10.2015 US 201562238259 P**

(43) Date of publication of application:
**15.08.2018 Bulletin 2018/33**

(73) Proprietors:
• **Services Pétroliers Schlumberger**
**75007 Paris (FR)**
Designated Contracting States:
**FR**
• **Geoquest Systems B.V.**
**2586 BJ The Hague (NL)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**

(72) Inventor: **AARRE, Victor**
**N-4068 Tananger (NO)**

(74) Representative: **Schlumberger Intellectual Property Department**
**Parkstraat 83**
**2514 JG Den Haag (NL)**

(56) References cited:
US-A- 5 642 327        US-A1- 2011 161 009
US-A1- 2013 235 695        US-B1- 6 502 038
US-B2- 8 639 443

• ANDY ROBERTS: "Curvature attributes and their application to 3D interpreted horizons", FIRST BREAK, vol. 19, no. 2, 2 February 2001 (2001-02-02), pages 85-100, XP055566490, HOUTEN, NL ISSN: 0263-5046, DOI: 10.1046/j.0263-5046.2001.00142.x
• Margaret Young: "Statistical characterization of altitude matrices by computer", , 1978, XP055584339, Retrieved from the Internet: URL:https://apps.dtic.mil/dtic/tr/fulltext /u2/a086793.pdf [retrieved on 2019-04-29]
• FLYNN P J ET AL: "On reliable curvature estimation", COMPUTER VISION AND PATTERN RECOGNITION, 1989. PROCEEDINGS CVPR '89., IEEE COMPUTER SOCIETY CONFERENCE ON SAN DIEGO, CA, USA 4-8 JUNE 1989, WASHINGTON, DC, USA,IEEE COMPUT. SOC. PR, US, 4 June 1989 (1989-06-04), pages 110-116, XP032391809, DOI: 10.1109/CVPR.1989.37837 ISBN: 978-0-8186-1952-6

EP 3 359 983 B1

**Description**

RELATED APPLICATION

This application claims priority to and the benefit of a US Provisional Application having Serial No. 62/238259 , filed 7 October 2015.

BACKGROUND

Reflection seismology finds use in geophysics, for example, to estimate properties of subsurface formations. As an example, reflection seismology may provide seismic data as a type of imagery data representing waves of elastic energy (e.g., as transmitted by P-waves and S-waves, in a frequency range of approximately 1 Hz to approximately 100 Hz). Seismic data may be processed and interpreted, for example, to understand better composition, fluid content, extent and geometry of subsurface rocks.

Andy Roberts "Curvature attributes and their application to 3D interpreted horizons", First break, vol. 19, no. 2, 2 February 2001, pages 85-100 discloses (the references in parentheses correspond to citations of this document) a method (page 85: Introduction; pages 89-90,sections "Data set description" and "Computing curvature") for receiving imagery data.

SUMMARY

The computer-implemented method and the system according to the invention are defined by claims 1 and 13, respectively.

This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF THE DRAWINGS

Features and advantages of the described implementations can be more readily understood by reference to the following description taken in conjunction with the accompanying drawings.

Fig. 1 illustrates an example system that includes various components for modeling a geologic environment;
Fig. 2 illustrates examples of formations, an example of a convention for dip, an example of data acquisition, and an example of a system;
Fig. 3 illustrates an example of a method;
Fig. 4 illustrates an example of a method;
Fig. 5 illustrates an example of a method;
Fig. 6 illustrates an example of a system;
Fig. 7 illustrates an example of a method with respect to data;
Fig. 8 illustrates an example of a method with respect to data;
Fig. 9 illustrates an example of a method with respect to data
Fig. 10 illustrates an example of a method with respect to data;
Fig. 11 illustrates examples of equations and examples of plots;
Fig. 12 illustrates examples of equations;
Fig. 13 illustrates an example of a method with respect to data;
Fig. 14 illustrates examples of workflows with respect to data;
Fig. 15 illustrate an example of data associated with an example of a workflow;
Fig. 16 illustrates examples of equations;
Fig. 17 illustrates examples of equations; and
Fig. 18 illustrates example components of a system and a networked system.

DETAILED DESCRIPTION

The following description includes the best mode presently contemplated for practicing the described implementations. This description is not to be taken in a limiting sense, but rather is made merely for the purpose of describing the general principles of the implementations. The scope of the described implementations should be ascertained with reference to the issued claims.

In various example embodiments, a method can include receiving imagery data; fitting a multidimensional polynomial function to at least a portion of the imagery data to generate one or more values for one or more corresponding parameters of the function; and generating curvature attribute data based at least in part on the fitting. In such an example, imagery data can be seismic data or, for example, another type of imagery data (e.g., medical, meteorological, nondestructive testing, etc.).

As an example, a multidimensional polynomial function can be utilized as part of a filtering process. For example, a method can include generating filtered imagery data.

In various example embodiments, one or more filters may be applied to attenuate seismic noise. Such an approach may be part of a workflow such as, for example, an interpretation workflow that operates on data such as seismic data, data derived from seismic data, etc.

As an example, a method may include analyzing seismic data to detect features such as horizons, fractures, other structures, etc. As an example, seismic analyses may be implemented in a framework as a module, set of modules, etc.

Where seismic data may include noise at a level to be considered "noisy", an analysis or analyses may include filtering. As an example, one or more analyses may be performed to assist with detection of one or more features of interest in oil and gas exploration and production (E&P). For example, results from an analysis may assist with well placement, geologic modeling, sill analyses, detection of fractured zones or fracture corridors, and in E&P for unconventional resources and carbonate fields (e.g., consider shale fields).

As an example, filter may aim to efficiently attenuate one or more types of noise that may exist in seismic data, processed seismic data, etc. As an example, a filtering technique may be applied to 3D seismic images optionally without dip-steering of a filter. In such an example, the filtering technique may provide an ability to calculate various shape and curvature attributes from a 3D seismic image, in addition to one or more curvature attributes (e.g., as may be calculated from one or more structural attributes). As an example, an approach may provide for an ability to decompose a 3D seismic image into separate architectural elements, for example, based on one or more of calculated shape, direction and curvature attribute(s). As an example, a filtering technique may provide for an ability to perform analytics between 3D seismic data and one or more types of measurements (e.g. wireline measurements, etc.).

As an example, a filtering technique may employ fitting of a parametric function to data (e.g., seismic data, data derived from seismic data, etc.) to first attenuate noise, and then calculate one or more attributes based on the parametric function. As an example, a least-squares fitting may be employed to generate a parametric function.

As an example, a method can include implementing a low-pass filter that can act to smooth data. For example, consider a Savitzky-Golay filter (S-G filter). As an example, an S-G filter may be implemented as a digital filter that can be applied to a set of digital data points for the purpose of smoothing the data, that is, to increase the signal-to-noise ratio without substantially distorting the signal.

As an example, a method can include convolution, for example, performed via fitting successive sub-sets of adjacent data points with a low-degree polynomial by a linear least-squares approach. In such an example, when the data points are approximately equally spaced, an analytical solution to least-squares equations may be determined, for example, in the form of a single set of "convolution coefficients" that can be applied to a plurality of data sub-sets, to give estimates of a smoothed signal, (e.g., or derivatives of the smoothed signal) at a central point of each data sub-set to which it is applied. As an example, an S-G filter may be applied to multidimensional data (e.g., 2D data, 3D data, etc.).

Fracture corridors or faults may give rise to seismic signals that may be exhibited in acquired seismic data, for example, in cross sections and as lineaments on slices or seismic surfaces. Detection of such features may include processing seismic signals, seismic data or both to generate one or more edge detection attributes, for example, where an attribute may be considered a measurable "property" of seismic data (e.g., consider amplitude, dip, frequency, phase, polarity, etc.). For example, an attribute may be a value or a set of values derived from seismic signals, seismic data, etc. and defined with respect to a coordinate system (e.g., one-dimensional, two-dimensional, three-dimensional, four-dimensional or of an even higher dimension). As an example, a dimension may be a spatial dimension, a time dimension, a frequency dimension, etc. As an example, consider providing seismic data as a "cube" where each voxel (volume element) in the cube has a value. In such an example, an edge detection algorithm may process the values in a cube to generate new values where the new values are referred to collectively as an edge detection attribute (e.g., an attribute cube).

As an example, a seismic cube (e.g., a seismic volume or seismic data for a volume) may be processed to generate an attribute cube (e.g., an attribute volume or attribute values for a volume). As another example, a seismic surface may be processed to generate an attribute surface. As yet another example, a seismic line may be processed to generate an attribute line. As an example, a seismic point may be processed to generate an attribute point.

Attributes may be derived, measured, etc., for example, at one instant in time, for multiple instances in time, over a time window, etc. and, for example, may be measured on a single trace, on a set of traces, on a surface interpreted from seismic data, etc. Attribute analysis may include assessment of various parameters, for example, as to a reservoir, consider a hydrocarbon indicator derived from an amplitude variation with offset (AVO) analysis.

As to structure detection in a seismic cube, on a seismic reflection surface, etc., various techniques have been applied such as those including local angle and azimuth angle; minimum, maximum, and Gaussian curvature; coherence; 3D curvatures; and spectral decomposition. Various techniques tend to be sensitive to noise in seismic data, acquisition footprint in seismic data or both noise and acquisition footprint in seismic data. While filtering or smoothing may be applied in an effort to eliminate noise and acquisition footprints in seismic data and to obtain more useful information about faults and fractures, such filtering or smoothing may suppress noise and acquisition footprints that include useful information (e.g., about latent structures, etc.). In other words, filtering, smoothing, etc. of seismic data may "remove" or "diminish" small seismic data features (e.g., small in time, space or both time and space) that may be associated with faults, fractures, etc. (e.g., small seismic data features associated with seismic energy interacting with faults, fractures, etc.).

As to noise, it may arise from unwanted seismic energy, such as shot generation ground roll, surface waves, multiples, effects of weather, random occurrences in the Earth, seismology equipment, etc. Noise may exist as coherent noise, incoherent noise or other type of noise. As an example, coherent noise may appear as undesirable seismic energy artifacts with somewhat consistent phase from seismic trace to seismic trace (e.g., consider ground roll and multiples). As an example, incoherent noise, including random noise, may appear as disturbances in seismic data that lack coherence (e.g., lack a phase relationship between adjacent traces).

As to acquisition footprint, a footprint may refer to a region for which seismic data are acquired while an "acquisition footprint" may refer to artifacts that result from equipment, techniques, etc. used to acquire the seismic data. For example, for a region at sea, a footprint may be covered by an array of streamers towed by a vessel or vessels. In such an example, the spacing between streamers may be evidenced in seismic data as an acquisition footprint. For example, an acquisition footprint may appear as variations in properties of seismic data (e.g., encountered during processing) that are related to acquisition geometry and that may distort amplitude and phase of reflections.

As an example, consider seismic data where information about a structure (e.g., a fault, a fracture, etc.) exists within the data as high-frequency features in cross sections and as lineaments in slices or in seismic surfaces, which may lack coherence (e.g., to varying degree depending on one or more factors). As noise may include high-frequency characteristics and as information for acquisition footprint may exist as high-frequency artifacts within seismic data, approaches that aim to reduce the impact of noise and acquisition footprint within seismic data may also strip out at least a portion of the high-frequency features within the seismic data that are associated with a latent structure or latent structures.

As an example, a method may include accessing or providing wellbore information. As an example, fault and fracture auto tracking technology such as ant-tracking may be applied to one or more selected slices and/or cubes, for example, to improve or enhance information (e.g., consider ant-tracking to generate a fracture image). As an example, detecting may include classifying, for example, where classification information (e.g., model information, results from previously analyzed data, etc.) may assist in detecting one or more features that may belong to a class of features (e.g., a type of feature).

Below, an example of a system is described followed by various technologies, including examples of techniques, which may, for example, include filtering, etc.

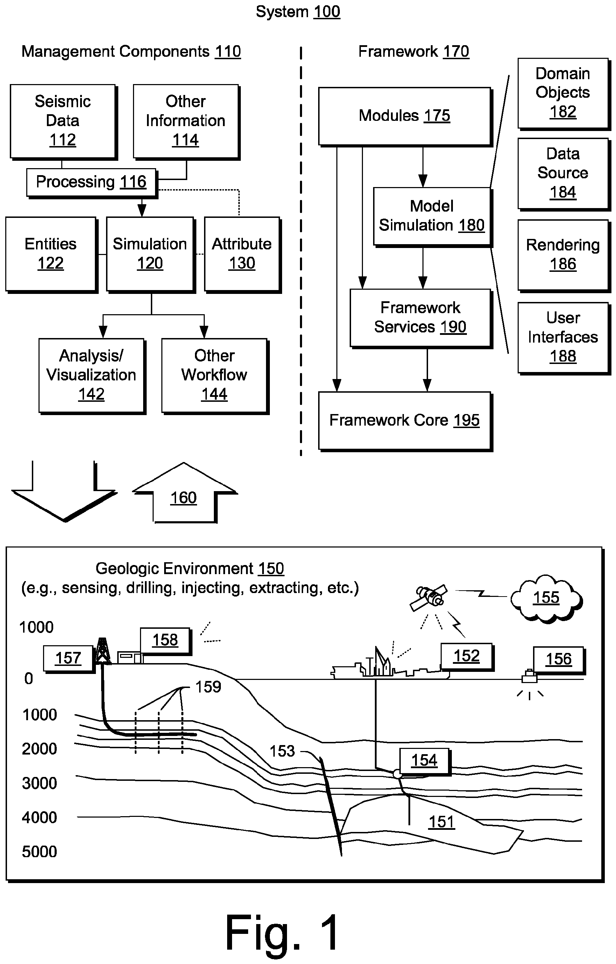

Fig. 1 shows an example of a system 100 that includes various management components 110 to manage various aspects of a geologic environment 150 (e.g., an environment that includes a sedimentary basin, a reservoir 151, one or more fractures 153, etc.). For example, the management components 110 may allow for direct or indirect management of sensing, drilling, injecting, extracting, etc., with respect to the geologic environment 150. In turn, further information about the geologic environment 150 may become available as feedback 160 (e.g., optionally as input to one or more of the management components 110).

In the example of Fig. 1, the management components 110 include a seismic data component 112, an additional information component 114 (e.g., well/logging data), a processing component 116, a simulation component 120, an attribute component 130, an analysis/visualization component 142 and a workflow component 144. In operation, seismic data and other information provided per the components 112 and 114 may be input to the simulation component 120.

In an example embodiment, the simulation component 120 may rely on entities 122. Entities 122 may include earth entities or geological objects such as wells, surfaces, reservoirs, etc. In the system 100, the entities 122 can include virtual representations of actual physical entities that are reconstructed for purposes of simulation. The entities 122 may include entities based on data acquired via sensing, observation, etc. (e.g., the seismic data 112 and other information 114). An entity may be characterized by one or more properties (e.g., a geometrical pillar grid entity of an earth model may be characterized by a porosity property). Such properties may represent one or more measurements (e.g., acquired data), calculations, etc.

In an example embodiment, the simulation component 120 may rely on a software framework such as an object-based framework. In such a framework, entities may include entities based on pre-defined classes to facilitate modeling and simulation. A commercially available example of an object-based framework is the MICROSOFT® .NET™ framework (Redmond, Washington), which provides a set of extensible object classes. In the .NET™ framework, an object class encapsulates a module of reusable code and associated data structures. Object classes can be used to instantiate object instances for use in by a program, script, etc. For example, borehole classes may define objects for representing boreholes based on well data.

In the example of Fig. 1, the simulation component 120 may process information to conform to one or more attributes specified by the attribute component 130, which may include a library of attributes. Such processing may occur prior to input to the simulation component 120 (e.g., consider the processing component 116). As an example, the simulation component 120 may perform operations on input information based on one or more attributes specified by the attribute component 130. In an example embodiment, the simulation component 120 may construct one or more models of the geologic environment 150, which may be relied on to simulate behavior of the geologic environment 150 (e.g., responsive to one or more acts, whether natural or artificial). In the example of Fig. 1, the analysis/visualization component 142 may allow for interaction with a model or model-based results. As an example, output from the simulation component 120 may be input to one or more other workflows, as indicated by a workflow component 144.

As an example, the simulation component 120 may include one or more features of a simulator such as the ECLIPSE™ reservoir simulator (Schlumberger Limited, Houston Texas), the INTERSECT™ reservoir simulator (Schlumberger Limited, Houston Texas), etc. As an example, a reservoir or reservoirs may be simulated with respect to one or more enhanced recovery techniques (e.g., consider a thermal process such as SAGD, etc.).

In an example embodiment, the management components 110 may include features of a commercially available simulation framework such as the PETREL@ seismic to simulation software framework (Schlumberger Limited, Houston, Texas). The PETREL@ framework provides components that allow for optimization of exploration and development operations. The PETREL@ framework includes seismic to simulation software components that can output information for use in increasing reservoir performance, for example, by improving asset team productivity. Through use of such a framework, various professionals (e.g., geophysicists, geologists, and reservoir engineers) can develop collaborative workflows and integrate operations to streamline processes. Such a framework may be considered an application and may be considered a data-driven application (e.g., where data is input for purposes of simulating a geologic environment).

In an example embodiment, various aspects of the management components 110 may include add-ons or plug-ins that operate according to specifications of a framework environment. For example, a commercially available framework environment marketed as the OCEAN@ framework environment (Schlumberger Limited, Houston, Texas) allows for integration of add-ons (or plug-ins) into a PETREL@ framework workflow. The OCEAN@ framework environment leverages .NET® tools (Microsoft Corporation, Redmond, Washington) and offers stable, user-friendly interfaces for efficient development. In an example embodiment, various components may be implemented as add-ons (or plug-ins) that conform to and operate according to specifications of a framework environment (e.g., according to application programming interface (API) specifications, etc.).

Fig. 1 also shows an example of a framework 170 that includes a model simulation layer 180 along with a framework services layer 190, a framework core layer 195 and a modules layer 175. The framework 170 may include the commercially available OCEAN@ framework where the model simulation layer 180 is the commercially available PETREL@ model-centric software package that hosts OCEAN@ framework applications. In an example embodiment, the PETREL@ software may be considered a data-driven application. The PETREL@ software can include a framework for model building and visualization. Such a model may include one or more grids.

The model simulation layer 180 may provide domain objects 182, act as a data source 184, provide for rendering 186 and provide for various user interfaces 188. Rendering 186 may provide a graphical environment in which applications can display their data while the user interfaces 188 may provide a common look and feel for application user interface components.

In the example of Fig. 1, the domain objects 182 can include entity objects, property objects and optionally other objects. Entity objects may be used to geometrically represent wells, surfaces, reservoirs, etc., while property objects may be used to provide property values as well as data versions and display parameters. For example, an entity object may represent a well where a property object provides log information as well as version information and display information (e.g., to display the well as part of a model).

In the example of Fig. 1, data may be stored in one or more data sources (or data stores, generally physical data storage devices), which may be at the same or different physical sites and accessible via one or more networks. The model simulation layer 180 may be configured to model projects. As such, a particular project may be stored where stored project information may include inputs, models, results and cases. Thus, upon completion of a modeling session, a user may store a project. At a later time, the project can be accessed and restored using the model simulation layer 180, which can recreate instances of the relevant domain objects.

In the example of Fig. 1, the geologic environment 150 may include layers (e.g., stratification) that include a reservoir 151 and that may be intersected by a fault 153. As an example, the geologic environment 150 may be outfitted with any of a variety of sensors, detectors, actuators, etc. For example, equipment 152 may include communication circuitry to receive and to transmit information with respect to one or more networks 155. Such information may include information associated with downhole equipment 154, which may be equipment to acquire information, to assist with resource recovery, etc. Other equipment 156 may be located remote from a well site and include sensing, detecting, emitting or other circuitry. Such equipment may include storage and communication circuitry to store and to communicate data, instructions, etc. As an example, one or more satellites may be provided for purposes of communications, data acquisition, etc. For example, Fig. 1 shows a satellite in communication with the network 155 that may be configured for communications, noting that the satellite may additionally or alternatively include circuitry for imagery (e.g., spatial, spectral, temporal, radiometric, etc.).

Fig. 1 also shows the geologic environment 150 as optionally including equipment 157 and 158 associated with a well that includes a substantially horizontal portion that may intersect with one or more fractures 159. For example, consider a well in a shale formation that may include natural fractures, artificial fractures (e.g., hydraulic fractures) or a combination of natural and artificial fractures. As an example, a well may be drilled for a reservoir that is laterally extensive. In such an example, lateral variations in properties, stresses, etc. may exist where an assessment of such variations may assist with planning, operations, etc. to develop the reservoir (e.g., via fracturing, injecting, extracting, etc.). As an example, the equipment 157 and/or 158 may include components, a system, systems, etc. for fracturing, seismic sensing, analysis of seismic data, assessment of one or more fractures, etc.

As mentioned, the system 100 may be used to perform one or more workflows. A workflow may be a process that includes a number of worksteps. A workstep may operate on data, for example, to create new data, to update existing data, etc. As an example, a may operate on one or more inputs and create one or more results, for example, based on one or more algorithms. As an example, a system may include a workflow editor for creation, editing, executing, etc. of a workflow. In such an example, the workflow editor may provide for selection of one or more pre-defined worksteps, one or more customized worksteps, etc. As an example, a workflow may be a workflow implementable in the PETREL@ software, for example, that operates on seismic data, seismic attribute(s), etc. As an example, a workflow may be a process implementable in the OCEAN@ framework. As an example, a workflow may include one or more worksteps that access a module such as a plug-in (e.g., external executable code, etc.).

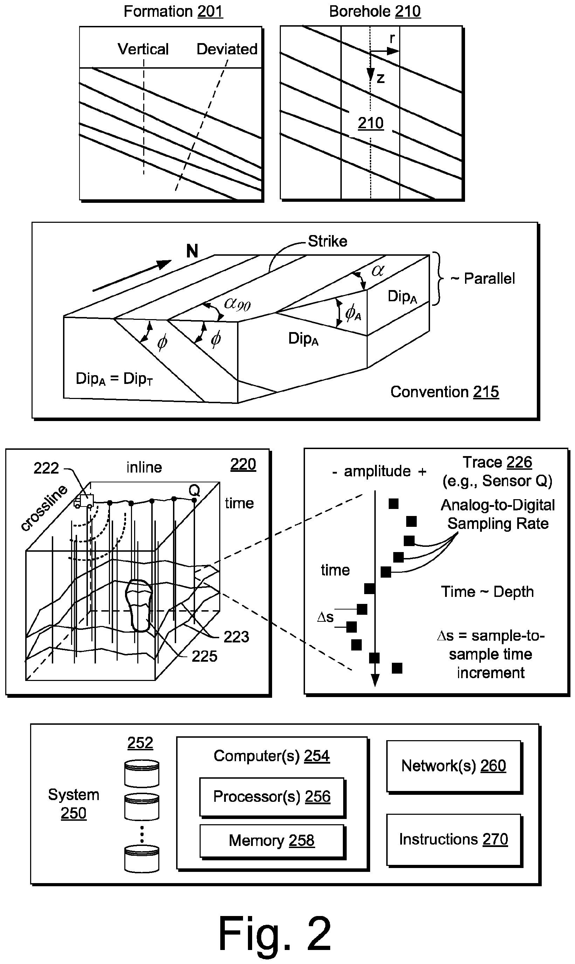

Fig. 2 shows an example of a formation 201, an example of a borehole 210, an example of a convention 215 for dip, an example of a data acquisition process 220, and an example of a system 250.

As shown, the formation 201 includes a horizontal surface and various subsurface layers. As an example, a borehole may be vertical. As another example, a borehole may be deviated. In the example of Fig. 2, the borehole 210 may be considered a vertical borehole, for example, where the z-axis extends downwardly normal to the horizontal surface of the formation 201.

As to the convention 215 for dip, as shown, the three dimensional orientation of a plane can be defined by its dip and strike. Dip is the angle of slope of a plane from a horizontal plane (e.g., an imaginary plane) measured in a vertical plane in a specific direction. Dip may be defined by magnitude (e.g., also known as angle or amount) and azimuth (e.g., also known as direction). As shown in the convention 215 of Fig. 2, various angles $\phi$ indicate angle of slope downwards, for example, from an imaginary horizontal plane (e.g., flat upper surface); whereas, azimuth refers to the direction towards which a dipping plane slopes (e.g., which may be given with respect to degrees, compass directions, etc.). Another feature shown in the convention of Fig. 2 is strike, which is the orientation of the line created by the intersection of a dipping plane and a horizontal plane (e.g., consider the flat upper surface as being an imaginary horizontal plane).

Some additional terms related to dip and strike may apply to an analysis, for example, depending on circumstances, orientation of collected data, etc. One term is "true dip" (see, e.g., $Dip_T$ in the convention 215 of Fig. 2). True dip is the dip of a plane measured directly perpendicular to strike (see, e.g., line directed northwardly and labeled "strike" and angle $\alpha_{90}$) and also the maximum possible value of dip magnitude. Another term is "apparent dip" (see, e.g., $Dip_A$ in the convention 215 of Fig. 2). Apparent dip may be the dip of a plane as measured in any other direction except in the direction of true dip (see, e.g., $\phi_A$ as $Dip_A$ for angle $\alpha$); however, it is possible that the apparent dip is equal to the true dip (see, e.g., $\phi$ as $Dip_A = Dip_T$ for angle $\alpha_{90}$ with respect to the strike). In other words, where the term apparent dip is used (e.g., in a method, analysis, algorithm, etc.), for a particular dipping plane, a value for "apparent dip" may be equivalent to the true dip of that particular dipping plane.

As shown in the convention 215 of Fig. 2, the dip of a plane as seen in a cross-section perpendicular to the strike is true dip (see, e.g., the surface with $\phi$ as $Dip_A = Dip_T$ for angle $\alpha_{90}$ with respect to the strike). As indicated, dip observed in a cross-section in any other direction is apparent dip (see, e.g., surfaces labeled $Dip_A$). Further, as shown in the convention 215 of Fig. 2, apparent dip may be approximately 0 degrees (e.g., parallel to a horizontal surface where an edge of a cutting plane runs along a strike direction).

In terms of observing dip in wellbores, true dip is observed in wells drilled vertically. In wells drilled in any other orientation (or deviation), the dips observed are apparent dips (e.g., which are referred to by some as relative dips). In order to determine true dip values for planes observed in such boreholes, as an example, a vector computation (e.g., based on the borehole deviation) may be applied to one or more apparent dip values.

As mentioned, another term that finds use in sedimentological interpretations from borehole images is "relative dip" (e.g., $Dip_R$). A value of true dip measured from borehole images in rocks deposited in very calm environments may be subtracted (e.g., using vector-subtraction) from dips in a sand body. In such an example, the resulting dips are called relative dips and may find use in interpreting sand body orientation.

A convention such as the convention 215 may be used with respect to an analysis, an interpretation, an attribute, etc. (see, e.g., various blocks of the system 100 of Fig. 1). As an example, various types of features may be described, in part, by dip (e.g., sedimentary bedding, faults and fractures, cuestas, igneous dikes and sills, metamorphic foliation, etc.).

Seismic interpretation may aim to identify and classify one or more subsurface boundaries based at least in part on one or more dip parameters (e.g., angle or magnitude, azimuth, etc.). As an example, various types of features (e.g., sedimentary bedding, faults and fractures, cuestas, igneous dikes and sills, metamorphic foliation, etc.) may be described at least in part by angle, at least in part by azimuth, etc.

As shown in the diagram 220 of Fig. 2, a geobody 225 may be present in a geologic environment. For example, the geobody 225 may be a salt dome. A salt dome may be a mushroom-shaped or plug-shaped diapir made of salt and may have an overlying cap rock (e.g., or caprock). Salt domes can form as a consequence of the relative buoyancy of salt when buried beneath other types of sediment. Hydrocarbons may be found at or near a salt dome due to formation of traps due to salt movement in association evaporite mineral sealing. Buoyancy differentials can cause salt to begin to flow vertically (e.g., as a salt pillow), which may cause faulting. In the diagram 220, the geobody 225 is met by layers which may each be defined by a dip angle $\phi$.

As an example, seismic data may be acquired for a region in the form of traces. In the example of Fig. 2, the diagram 220 shows acquisition equipment 222 emitting energy from a source (e.g., a transmitter) and receiving reflected energy via one or more sensors (e.g., receivers) strung along an inline direction. As the region includes layers 223 and the geobody 225, energy emitted by a transmitter of the acquisition equipment 222 can reflect off the layers 223 and the geobody 225. Evidence of such reflections may be found in the acquired traces. As to the portion of a trace 226, energy received may be discretized by an analog-to-digital converter that operates at a sampling rate. For example, the acquisition equipment 222 may convert energy signals sensed by sensor Q to digital samples at a rate of one sample per approximately 4 ms. Given a speed of sound in a medium or media, a sample rate may be converted to an approximate distance. For example, the speed of sound in rock may be of the order of around 5 km per second. Thus, a sample time spacing of approximately 4 ms would correspond to a sample "depth" spacing of about 10 meters (e.g., assuming a path length from source to boundary and boundary to sensor). As an example, a trace may be about 4 seconds in duration; thus, for a sampling rate of one sample at about 4 ms intervals, such a trace would include about 1000 samples where latter acquired samples correspond to deeper reflection boundaries. If the 4 second trace duration of the foregoing example is divided by two (e.g., to account for reflection), for a vertically aligned source and sensor, the deepest boundary depth may be estimated to be about 10 km (e.g., assuming a speed of sound of about 5 km per second).

In the example of Fig. 2, the system 250 includes one or more information storage devices 252, one or more computers 254, one or more networks 260 and instructions 270. As to the one or more computers 254, each computer may include one or more processors (e.g., or processing cores) 256 and memory 258 for storing the instructions 270, for example, executable by at least one of the one or more processors. As an example, a computer may include one or more network interfaces (e.g., wired or wireless), one or more graphics cards, a display interface (e.g., wired or wireless), etc.

In the example of Fig. 2, the one or more memory storage devices 252 may store seismic data for a geologic environment that spans kilometers in length and width and, for example, around 10 km in depth. Seismic data may be acquired with reference to a surface grid (e.g., defined with respect to inline and crossline directions). For example, given grid blocks of about 40 meters by about 40 meters, a 40 km by 40 km field may include about one million traces. Such traces may be considered 3D seismic data where time approximates depth. As an example, a computer may include a network interface for accessing seismic data stored in one or more of the storage devices 252 via a network. In turn, the computer may process the accessed seismic data via instructions, which may be in the form of one or more modules.

As an example, one or more attribute modules may be provided for processing seismic data. As an example, attributes may include geometrical attributes (e.g., dip angle, azimuth, continuity, seismic trace, etc.). Such attributes may be part of a structural attributes library (see, e.g., the attribute component 130 of Fig. 1). Structural attributes may assist with edge detection, local orientation and dip of seismic reflectors, continuity of seismic events (e.g., parallel to estimated bedding orientation), etc. As an example, an edge may be defined as a discontinuity in horizontal amplitude continuity within seismic data and correspond to a fault, a fracture, etc. Geometrical attributes may be spatial attributes and rely on multiple traces.

As mentioned, as an example, seismic data for a region may include one million traces where each trace includes one thousand samples for a total of one billion samples. Resources involved in processing such seismic data in a timely manner may be relatively considerable by today's standards. As an example, a dip scan approach may be applied to seismic data, which involves processing seismic data with respect to discrete planes (e.g., a volume bounded by discrete planes). Depending on the size of the seismic data, such an approach may involve considerable resources for timely processing. Such an approach may look at local coherence between traces and their amplitudes, and therefore may be classified in the category of "apparent dip."

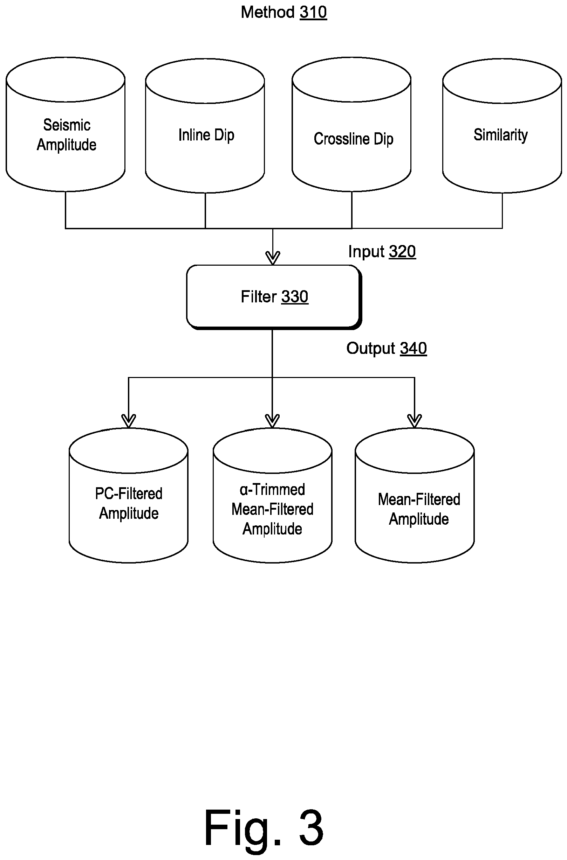

Fig. 3 shows an example of a method 310 that includes structure-oriented filtering of post-stack data, for example, via a program "sof3d" (Attribute Assisted Seismic Processing & Interpretation (AASPI), University of Oklahoma). As shown, the method 310 includes an input block 320, a filter block 330 and an output block 340. As shown, inputs of the input block 320 can include seismic amplitude (e.g., or other attribute to be smoothed such as velocity or impedance), the inline and crossline estimates of reflector dip (e.g., as computed from a dip program) and a measurement of similarity (e.g., as computed from a similarity program). In the method 310, the inline and crossline estimates of dip may have been previously filtered using an image filtering program (e.g., image_filt3d). Furthermore, the seismic amplitude data may have been subjected to a previous pass through structure-oriented filtering or may have been spectrally balanced. As shown, outputs of the output block 340 can include principal component- (also called Karhunen-Loeve, or KL-) alpha-trimmed-mean-, or mean-filtered versions of the input seismic amplitude data. In the method 310, after volumetric estimates of dip and azimuth are generated, simple filters that reject random noise and that preserve edges can be applied (e.g., edge-preserving structure oriented filtering).

As an example, a filtering technique may be applied without implementing dip-steering (i.e. as may be applied parallel to seismic reflectors in a 3D image). In such an example, a workflow may be performed that includes filtering without calculating structural dips, which may be compute-expensive, particularly to achieve determine accurate structural dips. Further, calculated dips, as mentioned above, are estimated dips, and tend to include errors particularly close to genuine discontinuities (e.g., one or more of faults, unconformities, salt boundaries, channel edges) in a seismic image. Where dip-steering is implemented, dip estimates can bias a filter. Such an approach may generate misleading results, for example, where a wrong dip is followed, particularly across a fault as to a horizon, etc.

As an example, a filtering technique may include applying a multidimensional filter and a multidimensional parametric function (e.g., z(x,y)). In such an example, there may be a number of fixed degrees of freedom. In such an example, the filtering technique may be applied to 2D or 3D post-stack seismic data. For example, such an approach may be applied as to one or more of inline slices, cross-line slices, time-slices, horizon-slices and other types of slices.

As an example, a 2D filter approach may implement a 2nd degree polynomial, z(x,y) in two dimensions. As an example, such an approach may be applied to 2D or 3D post-stack seismic data. For example, such an approach may be applied as to one or more of inline slices, cross-line slices, time-slices, horizon-slices and other types of slices.

As to a 2nd degree polynomial, it may be applied for calculating a least-squares fit in a selected number of 2D windows (e.g., of size m*n samples/pixels) in a 2D image (e.g., of size M*N samples/pixels). For example, consider, as an example, the following 2nd degree polynomial set forth as a polynomial function:

$$z(x,y) = ax^2 + by^2 + cxy + dx + ey + f \qquad (1)$$

where x is a position in a first dimension and y is position in a second dimension, and z(x,y) is the estimated value of the polynomial function at a location (x,y) in a 2D space.

As an example, the foregoing second order polynomial approach may be applied in a least-squares fitting scheme for attenuating noise in a seismic image or seismic images (e.g., optionally including an attribute image or attribute images). As an example, a method can include filtering individual 2D time-slices (e.g., or depth-slices, if the seismic data has been depth-migrated) in a 3D seismic cube independently. As an example, a method can include determining a value for the parameter "f" in the equation (1) as presented above.

As an example, a method can include selecting a window size or window sizes and optionally window shape or shapes. As an example, a method can include running several windows of different sized and/or shape. In such an example, a result may be selected to utilize for a particular set of data, a particular feature to be highlighted (e.g., enhanced as to signal-to-noise, etc.), a particular type of noise to be attenuated, etc.

As an example, a window may be a rectangular window. As an example, a window size may be selected based at least in part on a number of unknowns (e.g., in a polynomial). As an example, a window may include more samples than unknowns in a polynomial. As an example, consider a 3x3 window, a 3x2 window, a 2x3 window, a 33x33 window, etc. As an example, filtering may account for bin size (e.g., consider about 12.5 m × about 25 m). As an example, a window may be applied vertically, horizontally or at another angle. As an example, a sample size may be selected with respect to dimensions, optionally chosen independently as to sample rate and noise level. As an example, a window size and/or shape may be selected based at least in part on a shape and/or size of a feature and/or type of noise.

As an example, a process may aim to "connect" structures, for example, by resolving features such as ridges and/or valleys; optionally including applying one or more techniques such as, for example, ant-tracking.

As an example, a method may be applied to post-stack and/or pre-stack data. As an example, a method may include calculating dip estimates or not calculating dip estimates. As an example, as to pre-stack data, a method may be applied before migration or NMO correction. As an example, a method may be applied to common midpoint (CMP) data (e.g., gathers, etc.), optionally in set pairs, etc. As an example, a seismic survey may be an AVO, an AVA (e.g., with offsets/angles) and/or one or more other types of surveys. As an example, a survey may be a land-based and/or a sea-based survey (e.g., optionally employing streamers. As an example, a method may be applied to data prior to calculation of dip estimates. In such an example, a quality of data may be assessed and optionally utilized to characterize the data and/or dip estimates calculated therefrom (e.g., as to certainty, quality, etc.).

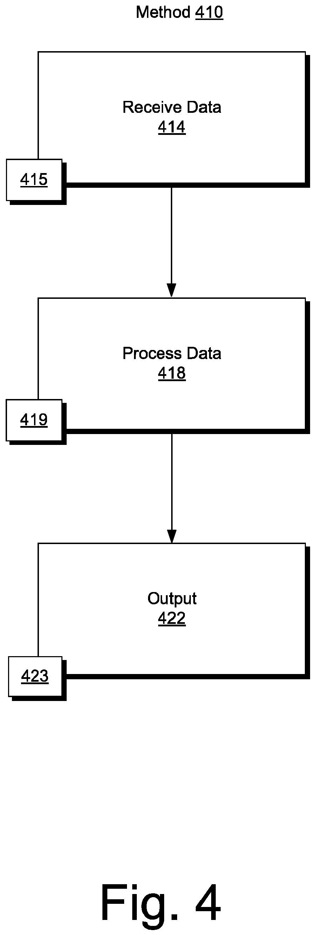

Fig. 4 shows an example of a method 410 that includes a reception block 414 for receiving seismic data; a process block 418 for processing at least a portion of the seismic data by fitting a multidimensional polynomial function to at least a portion of the data generate one or more values for one or more corresponding parameters of the function; and an output block 422 for outputting information (e.g., filtered data, parameter values, etc.).

As an example, the method 410 can include selecting a window size for the fitting. As an example, the method 410 can include least squares fitting of a second order multidimensional polynomial function to seismic amplitudes of a window.

As an example, a method can include receiving seismic data; fitting a multidimensional polynomial function to at least a portion of the seismic data to generate one or more values for one or more corresponding parameters of the function; and, based at least in part on the fitting, outputting information.

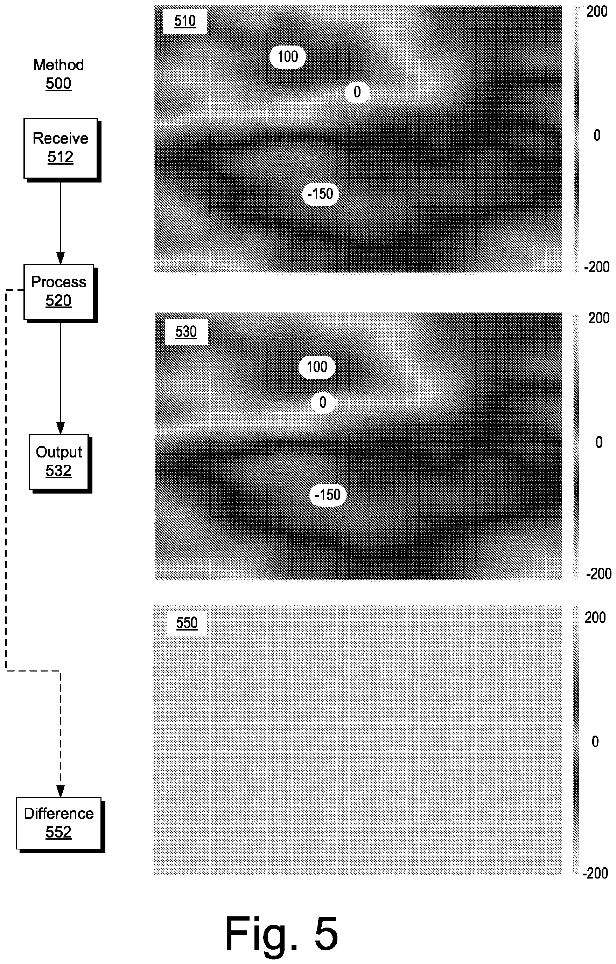

Fig. 5 shows an example of a method 500 that includes a reception block 512, a process block 520 and an output block 532 as well as an optional difference block 552. For example, data 510 may be received per the reception block 512, processed per the process block 520 and data 530 may be output per the output block 532. In such an example, difference data 550 between the data 510 and 530 may be stored, analyzed, rendered to a display, etc. Such difference data may represent at least in part an amount of noise removed (e.g., attenuated).

The method 500 of Fig. 5 can act to attenuate noise, for example, in 2D and/or 3D seismic images. The data 510 is a 2D time-slice image extracted from a 3D post-stack seismic cube that includes relatively straight lines, which are acquisition footprints (e.g., from seismic data acquisition and processing to arrive at the data 510).

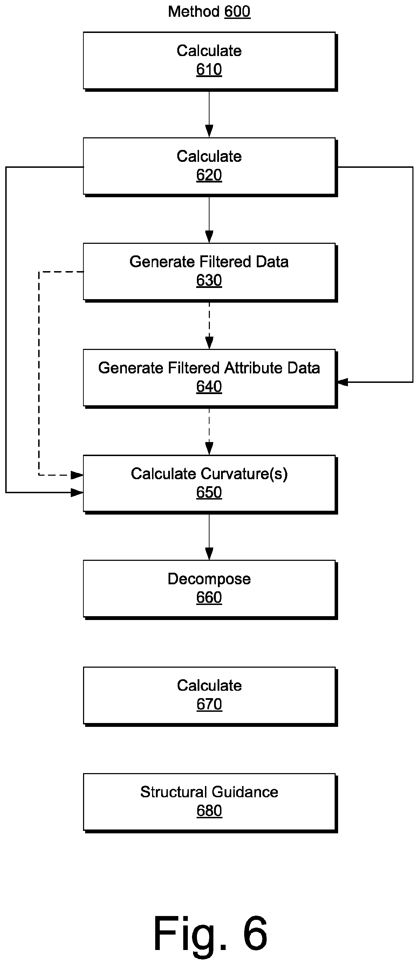

Fig. 6 shows an example of a method 600 that includes blocks 610, 620, 630, 640, 650, 660, 670 and 680. As an example, a workflow may include performing an action or actions of one or more of the blocks of the method 600 of Fig. 6.

As an example, the block 610 can be a calculation block for calculating a least-squares fit in 2D windows (of size m*n samples/pixels) in a 2D image (of size M*N samples/pixels) to an example polynomial function of the form (Equation (1) as set forth above and represented for convenience below, now italicized):

$$z(x,y) = ax^2 + by^2 + cxy + dx + ey + f \qquad (1)$$

where x is position in the first dimension and y is position in second dimension, and $z(x,y)$ is the estimated value of the polynomial function at location (x,y) in 2D space.

In such an example, the least-squares approximation may be performed, for each window in the image, by first defining a [6 x 1] coefficient vector $x$:

$$x^T = [\, a \; b \; c \; d \; e \; f \,] \qquad (2)$$

Such a process may then include defining a [p x 1] sample/pixel vector **y**, containing $p = m*n$ sample values $z_1, z_2, ..., z_p$ in the 2D window, such as:

$$y^T = [\, z_1 \; z_2 \; ... \; z_p \,] \qquad (3)$$

The process can then include defining a [ $p \times 6$ ] matrix **A,** where the values in $A$ can be set as follows:

$$A\,[\,i,\,1\,] = x_i^2 \qquad (4)$$

$$A\,[\,i,\,2\,] = y_i^2 \qquad (5)$$

$$A\,[\,i,\,3\,] = x_i{}^* \, y_i \qquad (6)$$

$$A [i, 4] = x_i \qquad (7)$$

$$A [i, 5] = y_i \qquad (8)$$

$$A [i, 6] = 1.0 \qquad (9)$$

where i = 1 ... p, $x_i$ is the signed distance between the location of sample #i and the center point of the window in the first (x) direction, and $y_i$ is the signed distance between the location of sample #i and the center point of the window in the second (y) direction.

In the foregoing example, it is implied that the window size p is to be equal or larger than 6. This is because at least six equations are to be considered to resolve the six unknown parameters in the vector x.

If $p = 6$, then consider the following relationship:

$$y = A\, x \qquad (10)$$

The foregoing implies that if A is invertible (and it will be, if at least three samples in each direction, i.e. m >= 3 and $n$ >= 3), then the process can include finding the coefficients in x, for example, as:

$$x = A^{-1}\, y \qquad (11)$$

If $p > 6$ then the system is an overdetermined system (i.e., more equations than unknowns). One example approach to resolve x in this situation is to estimate it in a least-squares sense. For example, consider finding x as follows:

$$x = B\, y \qquad (12)$$

where B is a [6x6] matrix, defined as:

$$B = (A^T A)^{-1} A^T \qquad (13)$$

Note that if the window size and sample spacing in both directions is common for all windows in the image, then B is invariant (i.e. it does not change as a process moves the window around in the image), and can hence be calculated once. Such an approach may be a "Moore-Penrose pseudoinverse approach", which may efficiently calculate x as the trivial convolution of **B** and **y** (Equation (12)).

As an example, the block 620 of the method 600 can be another calculation block. For example, with inverted polygon parameters $x^T = [a\ b\ c\ d\ e\ f]$, the calculation block 620 can include calculating estimated (and hence filtered) values at one or more locations in a window using Equation (1). For example, consider calculating the filtered value z' for a center sample/pixel in each window as follows:

$$z' = z(0,0) = f \qquad (14)$$

In such a manner, the method 600 may include constructing a filtered image by, for each sample/pixel in the image, extracting a window of samples around it, invert for z', and set z' as the filtered value for that location in the image.

As an example, the calculation block 620 may optionally implement a 2D Savitzky-Golay filter, for example, as explained above (see, e.g., the S-G filter above).

The aforementioned approach (e.g., of blocks 610 and 620) may be part of a 2D filter approach that uses one or more types of parametric function z(x,y), with a particular fixed degrees of freedom. As an example, the block 630 of the method 600 of Fig. 6 can be a generation block for generating filtered data. For example, information derived from the blocks 610 and 620 may be applied, for example, to 2D or 3D post-stack seismic data (e.g., inline slices, cross-line slices, time-slices, horizon-slices or other). As an example, such an approach may be applied, for example, to pre-stack seismic data. As an example, an approach may be applied to data to generate filtered data where the approach attenuates noise in the data that can include footprint acquisition noise. In such an example, the filtered data may be relatively free of one or more types of noise.

As an example, a 2D filter approach may include the aforementioned particular 2nd degree polynomial, given as $z(x,y)$, in two dimensions in Equation (1). Such an approach may be applied to 2D or 3D post-stack seismic data (e.g., inline slices, cross-line slices, time-slices, horizon-slices or other) and/or to pre-stack seismic data.

Various trials demonstrate that the aforementioned filter approach, using that particular polynomial form (Equation (1)) for the least-squares fitting, can be efficient and can attenuate noise in seismic images. As an example, consider applying such an approach by filtering one or more 2D time-slices (e.g., or depth-slice, if the seismic data has been depth-migrated) in a 3D seismic cube, for example, independently.

Referring again to the method 500 of Fig. 5, the data 530 corresponds to the data 510, the seismic 2D image, after filtering, using 9x9 samples window size; notice that the particular straight lines in the image have been attenuated. Evidence of such lines is visible in the difference data 550, which is the estimated, and hence attenuated, noise between the input image (data 510) and the filtered image (data 530) in Fig. 5. Note that the estimated noise does include linear features associated with acquicition/processing, plus a bit of estimated random noise. The linear features dominate the difference data 550 and there is little correlation between the input image (data 510) and the noise of the difference data 550, adding confidence to the result.

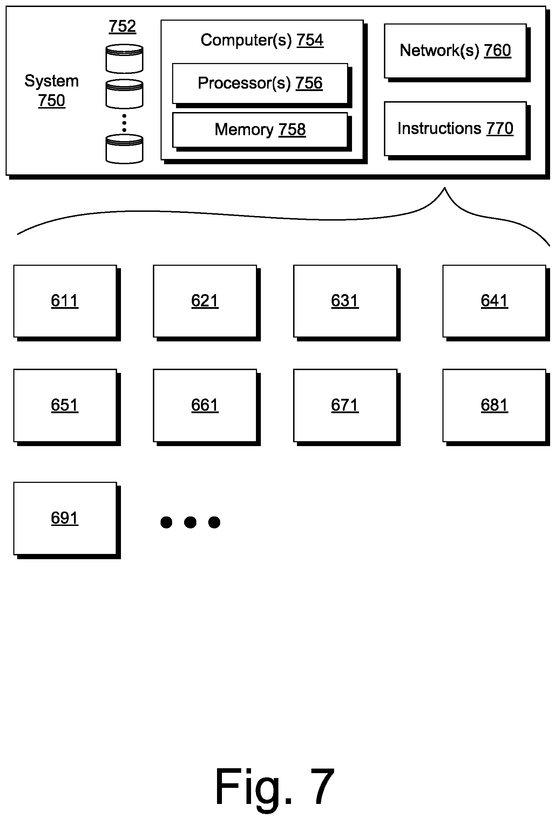

Fig. 7 shows an example of a system 750 that includes one or more information storage devices 752, one or more computers 754, one or more networks 760 and instructions 770. As to the one or more computers 754, each computer may include one or more processors (e.g., or processing cores) 756 and memory 758 for storing the instructions 770, for example, executable by at least one of the one or more processors. As an example, a computer may include one or more network interfaces (e.g., wired or wireless), one or more graphics cards, a display interface (e.g., wired or wireless), etc. In the example of Fig. 7, the one or more memory storage devices 752 may store seismic data for a geologic environment.

As an example, a system can include one or more processors for processing information; memory operatively coupled to the one or more processors; and modules that include instructions stored in the memory and executable by at least one of the one or more processors. As shown in the example of Fig. 7, such modules may include modules that correspond to one or more of the blocks of the example method 600 of Fig. 6, labeled as 611, 621, 631, 641, 651, 661, 671 and 681. As an example, one or more other modules may be included as indicated by the block 691. As an example, a system may include an ant-tracking module for generating ant track data. As an example, a system may include a fracturing module, for example, to perform one or more calculations, tasks, etc. associated with fracturing. As an example, a system may include one or more modules, which may be provided to analyze data, control a process, perform a task, perform a workstep, perform a workflow, etc.

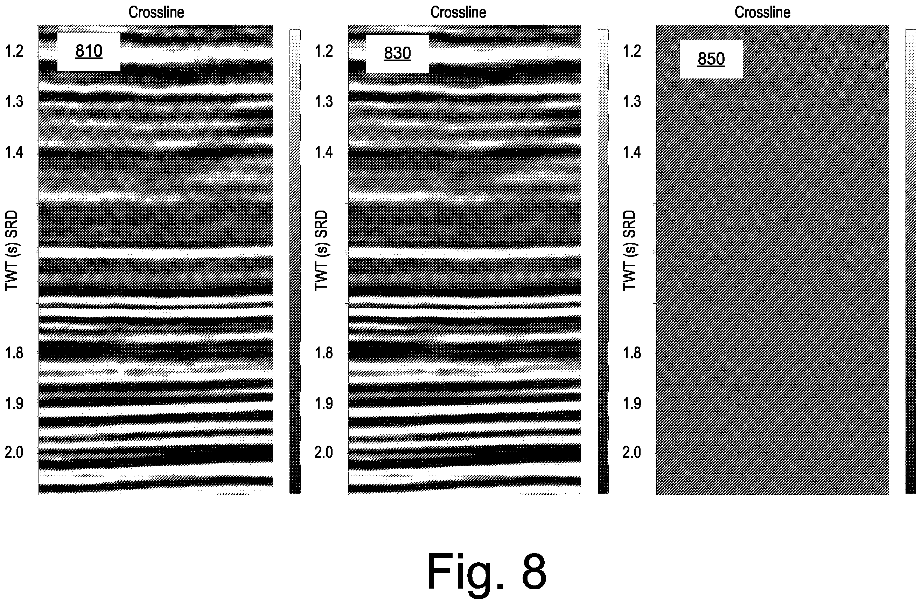

Fig. 8 shows an input inline section 810 to the left, a filtered inline section 830 in the center, and difference data 850 to the right. Note that the linear steeply-dipping noise is largely removed from the center image.

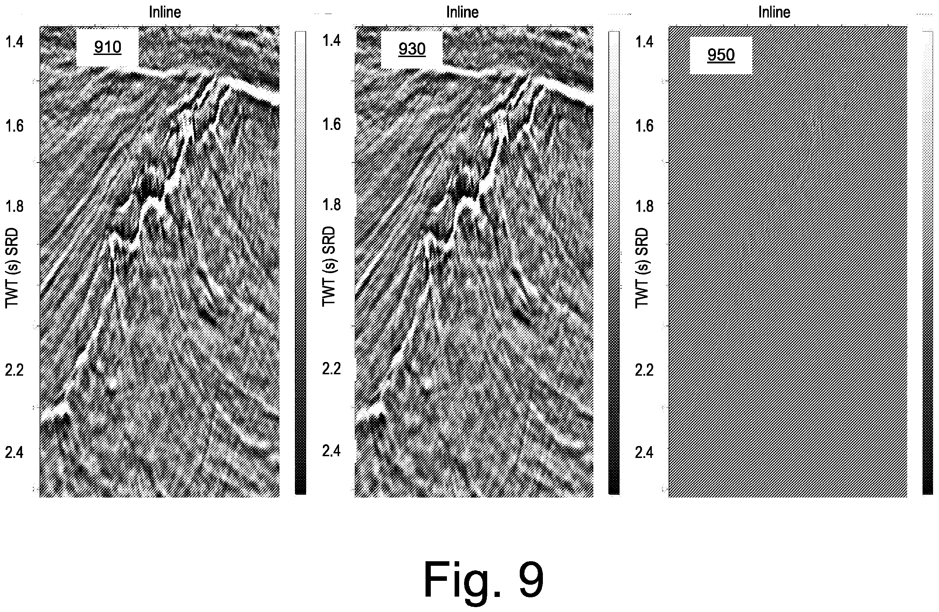

Fig. 9 shows an input vertical section 910 to the left, a filtered section 930 in the center (where each time-slice has been independently filtered), and difference data 950 (e.g., estimated noise) to the right. Note that there is little correlation between the estimated noise and the filtered image, demonstrating that the applied filtering approach can be useful even in structurally very complex areas, where various other methods may rely on dip-steering to avoid filtering away genuine signal features.

As an example, a filtering technique may be applied using a multidimensional polynomial where the filtering technique does not include dip-steering (e.g., it may be applied parallel to seismic reflectors in a 3D image). Calculating accurate structural dips can be compute-expensive as calculated dips can be estimated dips and can be wrong close to genuine discontinuities (e.g., faults, unconformities, salt boundaries, channel edges, etc.) in a seismic image. Such dips may result in errors for dip-steering (e.g., where a filter follows an erroneous dip). As explained with respect to the method 310 of Fig. 3, such an approach can include calculating dip (e.g., inline dip and crossline dip) and using such calculated dip for steering a filter (e.g., the filter 330). Calculating dip takes time and resources and where dip accuracy is not assured, a filter may be "misguided" by inaccurate dip.

As an example, the block 640 of the method 600 of Fig. 6 may be a generation block for generating filtered attribute data. For example, a 2D filter resulting at least in part from calculations of the blocks 610 and 620 can be applied to seismic attribute volumes, optionally in one or more arbitrary 2D direction (e.g., inline plane, cross-line plane, horizontal plane). As an example, window size may be selected in a manner that helps to focus on one or more objects of a particular size or size range (e.g., which may be known as "wavelength") in an attribute volume.

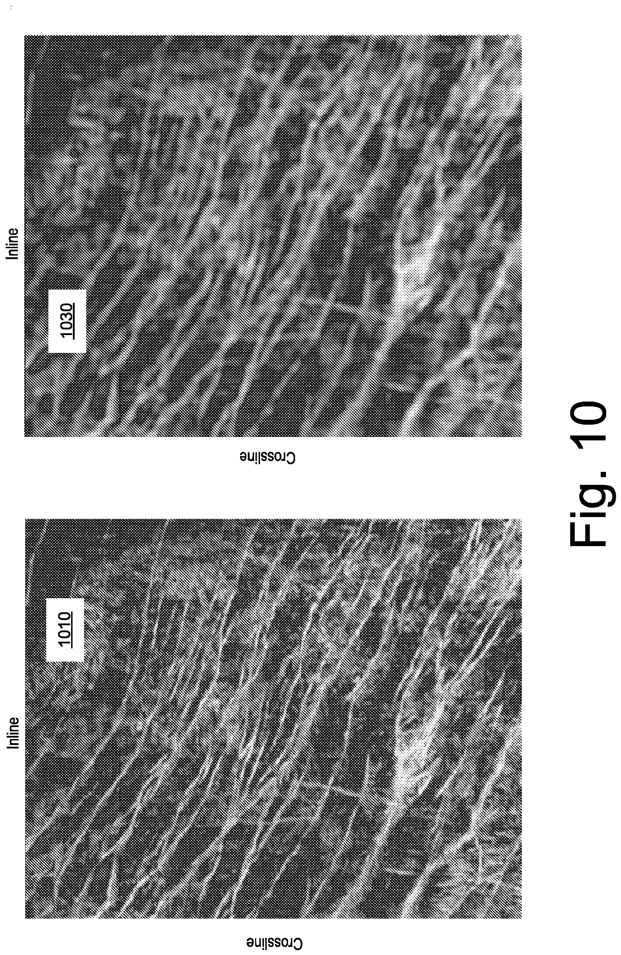

Fig. 10 shows a time-slice of input edge attribute data 1010 to the left, and data 1030 after filtering to the right, using an $11 \times 11$ sample window size (e.g., grid aperture); note that the lineaments appear more continuous in the data 1030.

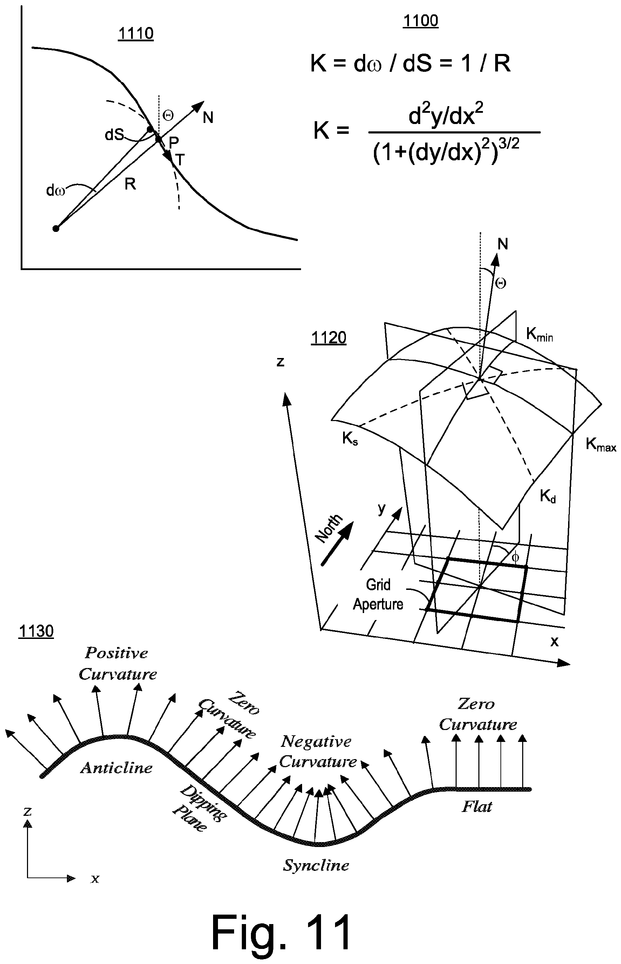

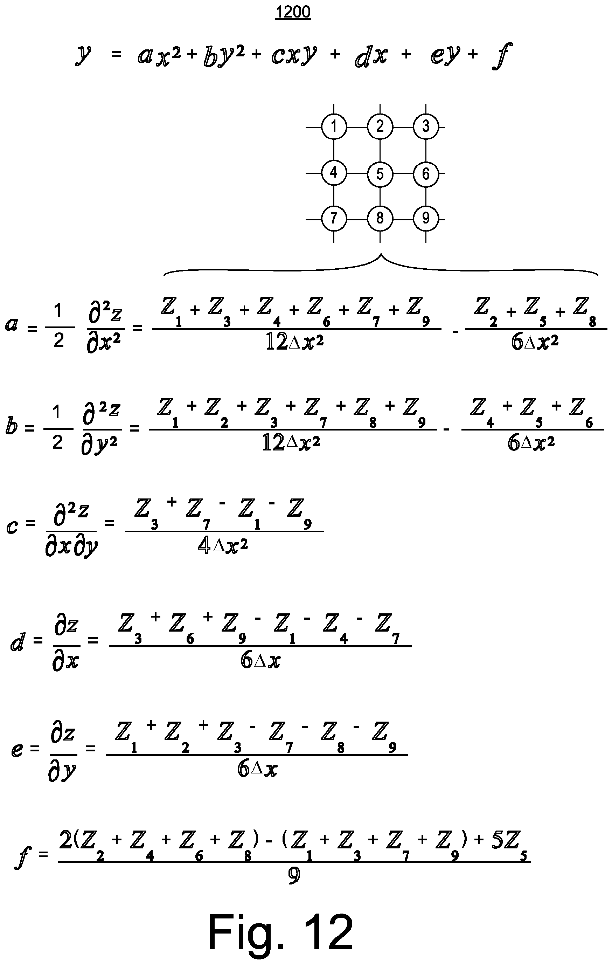

Fig. 11 shows equations 1100 and plots 1110, 1120 and 1130 while Fig. 12 shows equations 1200 along with a grid that includes nine points, which may represent a window size or aperture size.

An article by Roberts, A. (2001), Curvature attributes and their application to 3D interpreted horizons (First Break, 19: 85-100. doi: 10.1046/j.0263-5046.2001.00142.x).

As an example, where values of the shape index range between -1.0 and +1.0 with $S_i$ = -1.0 indicating a bowl or cup, a rut or valley is $S_i$ = -0.5, a saddle is $S_i$ = 0.0, a ridge is $S_i$ = +0.5 and a cap or dome is $S_i$ = +1.0. As an example, shape index values between the aforementioned values can indicate that the shape is somewhere between the shapes listed above. For example, a shape index of 0.75 may indicate that a shape is in the middle between a ridge and a dome, and hence may have a "cigar" shape.

In Roberts, the coefficients a-b-c-d-e are listed; noting that the coefficient "f" is not used in Roberts; whereas, as an example, as explained herein, the coefficient "f" may be utilized as part of a filtering technique (see, e.g., blocks 630 and/or 640 of the method 600 of Fig. 6).

With reference to Fig. 6, the block 650 can be a calculation block for calculating one or more curvatures (e.g., one or more curvature attributes). For example, as the method 600 can include calculating coefficients for the parametric function from seismic amplitude data, the method 600 can optionally include calculating one or more curvature attributes, which may be calculated as curvature attribute data. As an example, a method can include calculating curvature attributes that are not strictly structural attributes but that are rather "pseudo" curvature attributes which can be named "Amplitude Curvature" attributes (see, e.g., block 630) and, for example, "Edge Curvature" attributes (see, e.g., block 640).

While the term Amplitude Curvature is mentioned above, there is another use of this term, which may be more appropriately referred to as "Energy Curvature" because it involves first calculating the energy level in a whole 3D cube (e.g. using a vertical Root-Mean-Squared operator), then calculating the inline and cross-line gradients of the energy level, and finally using those two gradient volumes to estimate constants $a$, $b$ and $c$, and assume that $d$, $e$ and $f$ are all zero; where robustness is via spatially filtering the energy level cube before the gradients are calculated.

As an example, a method can include calculating one or more curvature attributes in a "pseudo" sense, for both amplitude 3D input seismic data and edge (e.g., or one or more other attributes derived from seismic data) 3D input data. As to some examples of curvature attributes, consider the following:

$$K_m = \frac{a(1+e^2)-cde+b(1+d^2)}{(1+d^2+e^2)^{3/2}} \qquad (15)$$

$$K_g = \frac{4ab-c^2}{(1+d^2+e^2)^2} \qquad (16)$$

$$K_{max} = K_m + \sqrt{K_m^2 \quad K_g} \qquad (17)$$

$$K_{min} = K_m \quad \sqrt{K_m^2 \quad K_g} \qquad (18)$$

$$S_i = \frac{2}{\pi} tan^{-1}\left[\frac{(K_{min}+K_{max})}{(K_{max}-K_{min})}\right] \qquad (19)$$

$$K_n = \left(\frac{K_{max}^2+K_{min}^2}{2}\right) \qquad (20)$$

$$Dip\ Angle = tan^{-1}\left(\sqrt{d^2+e^2}\right) \qquad (21)$$

$$Azimut = tan^{-1}\left(\frac{e}{d}\right) \qquad (22)$$

As to the foregoing example equations, Equation (15) is mean curvature, Equation (16) is Gaussian curvature, Equation (17) is maximum curvature, Equation (18) is minimum curvature, Equation (19) is shape index (e.g., to define local surface shape independent of scale), Equation (20) is curvedness (e.g., magnitude of curvature independent of shape), Equation (21) is dip angle and Equation (22) is azimuth. As an example, a combination of mean curvature and Gaussian curvature can allow for description of a local shape of a structure in imagery data. For example, where Gaussian curvature is less than zero, a local shape can be identified as a saddle, where Gaussian curvature is approximately zero, a local shape can be identified as a ridge (e.g., mean curvature greater than zero), flat or planar (e.g., mean curvature approximately zero), or a valley (e.g., mean curvature less than zero), and where Gaussian curvature is greater than zero, a local shape can be identified as a dome (e.g., mean curvature minimum and maximum greater than zero) or as a bowl (e.g., mean curvature minimum and maximum less than zero).

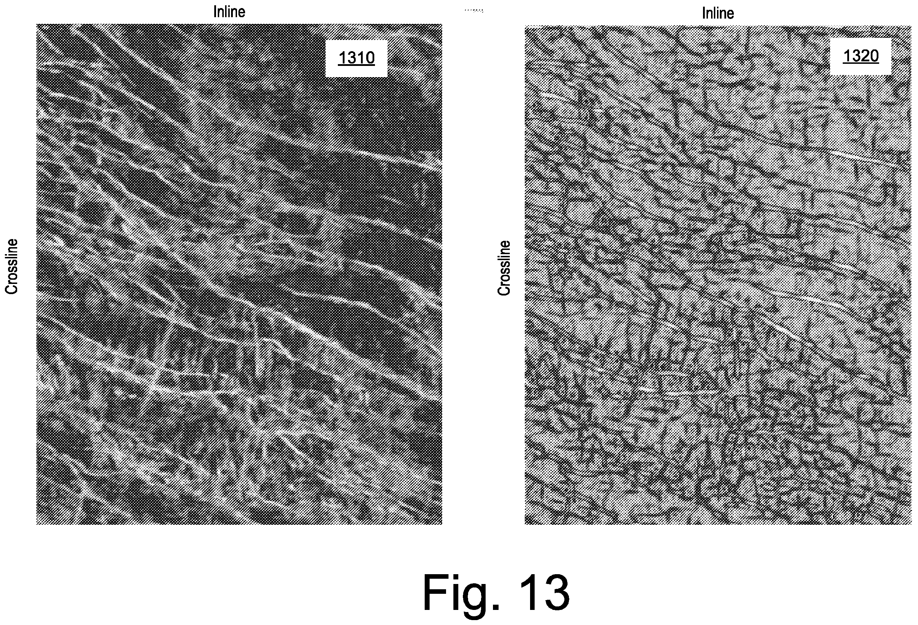

Fig. 13 shows time-slice of edge attribute data 1310 to the left and $K_{max}$ curvature of the edge attribute data 1320 to the right; note that the continuous lineaments are enhanced, while background energy is attenuated.

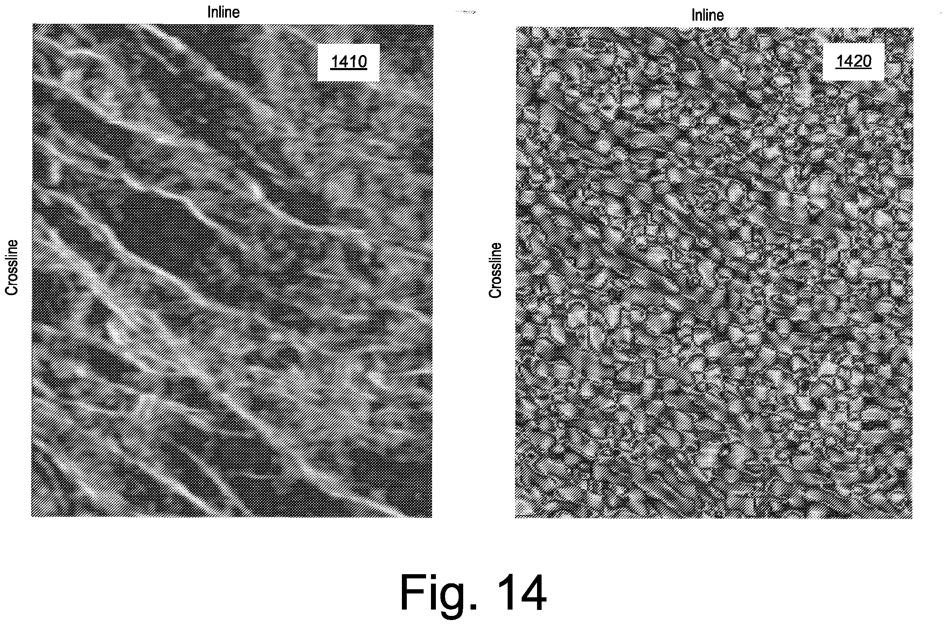

Fig. 14 shows time-slice of edge attribute data 1410 to the left and Shape Index for the edge attribute data 1420 to the right. As an example, anticlines can have a shape index close to +1.0, ridges can have a shape index close to +0.5, a saddle (or a flat) shape can have a shape index close to 0.0, a ridge can have a shape index close to -0.5 and a syncline (bowl) can have a shape index close to -1.0 (see, e.g., the plot 1130 of Fig. 11).

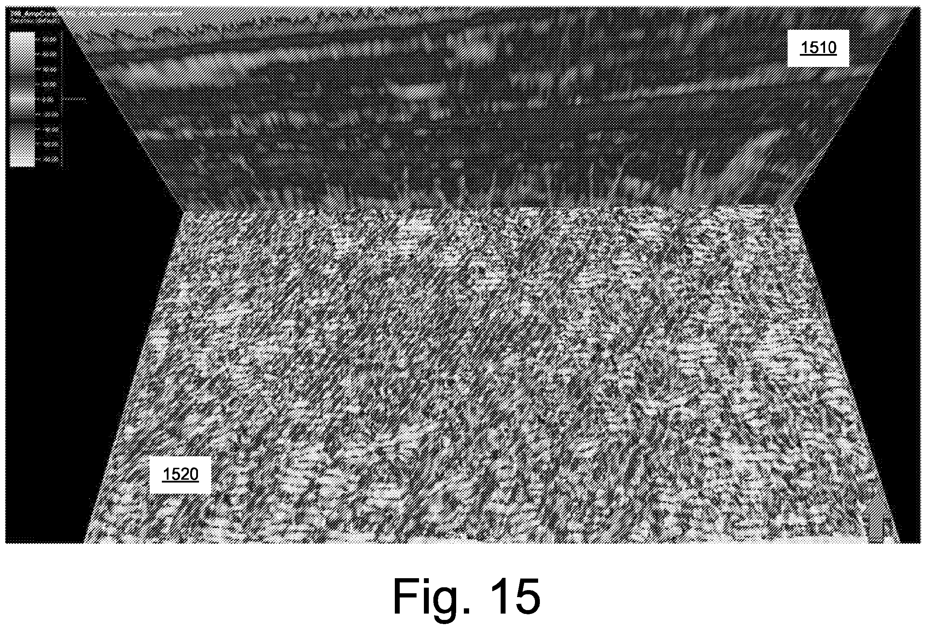

Fig. 15 shows Input Edge attribute in a vertical "inline" 1510 intersection and the corresponding pseudo Edge "Azimuth of Max Curvature" attribute in the time-slice 1520 (horizontal) intersection. In the example of Fig. 15, the prominent direction for the large-scale faults is approximately 40 degrees clockwise from North, bending towards about 60-70 degrees in the Southern part of the survey area.

As an example, the block 660 of Fig. 6 may be a decomposition block. For example, where the method 600 can provide approximate shape and azimuthal direction of features in seismic amplitude data, or in seismic attribute data, the method 600 may include decomposing the input volumes based on one or more of, for example, curvedness, shape and/or azimuth direction, and/or one or more other attributes (e.g., including one or more expressions including one or more of the constants a-f in the parameter vector x), as calculated from the input data, etc.

As an example, a method that may include one or more of the following:

Highlight karst structures in edge attributes (e.g., where they can have shape index close to +1.0);
Extract fault lineaments from the edge attributes (e.g., where they can have shape index close to +0.5);
Extract fault lineaments in a particular azimuth direction (e.g., filter on curvature azimuth and shape index); and
Remove lineaments which are likely to be acquisition footprints (e.g., where they can have azimuth close to the inline/sail angle).

As an example, the block 670 of Fig. 6 may be a calculation block that can include calculating one or more seismic attributes from noise-attenuated 2D and/or 3D seismic data (e.g., or seismic attribute data). As an example, an attribute may capture one or more properties of seismic data which previously were not available. For example, consider an ability to quickly calculate the azimuth of major and minor faults. As an example, consider running one or more regressions (e.g. correlations, neural-net mappings, unsupervised and/or supervised classification) between one or more attributes and/or other types of data, like wireline measurements along a borehole, etc.

As an example, the block 680 may be a structural guidance block that may implement, for example, structural steering. As an example, consider structural steering of a filter (e.g., as in the method 600). As an example, a method may include comparing filtering with and without structural guidance.

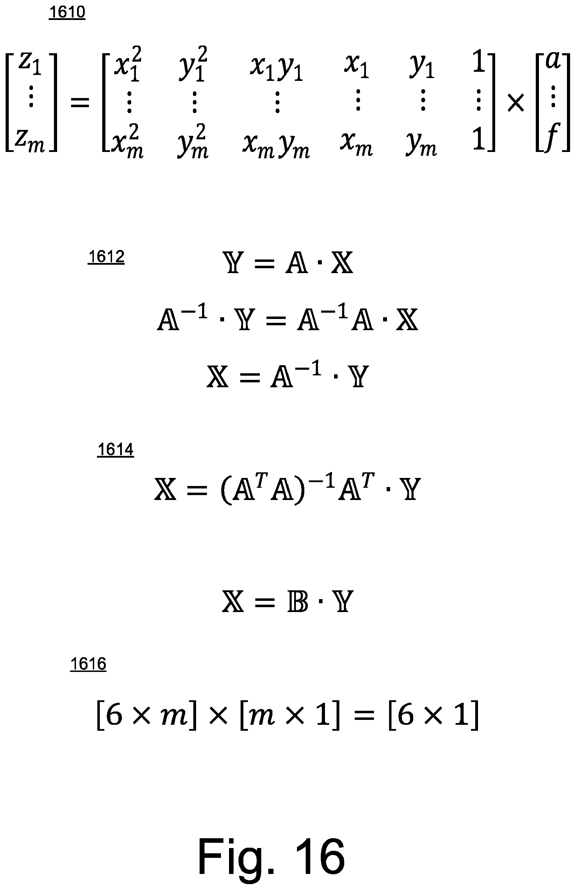

Fig. 16 shows examples of equations 1610, 1612, 1614 and 1616. Such equations may be employed, for example, in a method such as the method 600 of Fig. 6 (e.g., in the block 610). The equation 1610 includes a vector for six parameters of a multidimensional polynomial, listed as a, *b, c, d,* e and *f*, which may be represented as $\mathbb{X}$ while function values can be represented as $\mathbb{Y}$ and where the matrix (e.g., $6 \times 6$) can be represented as $\mathbb{A}$, which are shown in the equations 1612 and 1614, which also includes a notation for operations as to $\mathbb{A}$ as $\mathbb{B}$, which is the Moore-Penrose pseudo-inverse of $\mathbb{A}$. The equation 1616 illustrates the form of matrix and vectors with respect to *m*. As an example, the Moore-Penrose approach may be utilized to calculate a least squares fit to a system of linear equations that may lack a unique solution. As an example, such an approach may be utilized where, for example, *m* may optionally be greater than 6; noting that the equations 1612 represent an approach where an "exact" solution may be calculated (e.g., optionally where *m* may be equal to 6 or optionally less than 6).

As an example, fitting can include utilizing a Moore-Penrose pseudo-inverse approach where such fitting can be in a least-squares sense that aims to determine values of parameters of a multidimensional polynomial. As mentioned, given values of various parameters, one or more equations (see, e.g., the Equations (15) to (22), etc.) may be utilized to generate curvature attribute data. As an example, curvature attribute data may be utilized in a positive manner and/or in a negative manner. For example, in a positive manner, curvature attribute data may be utilized to identify curved structure(s) while, in a negative manner, curvature attribute data may be utilized to "filter-out" particular structure(s), which may, for example, help to identify linear structure(s).

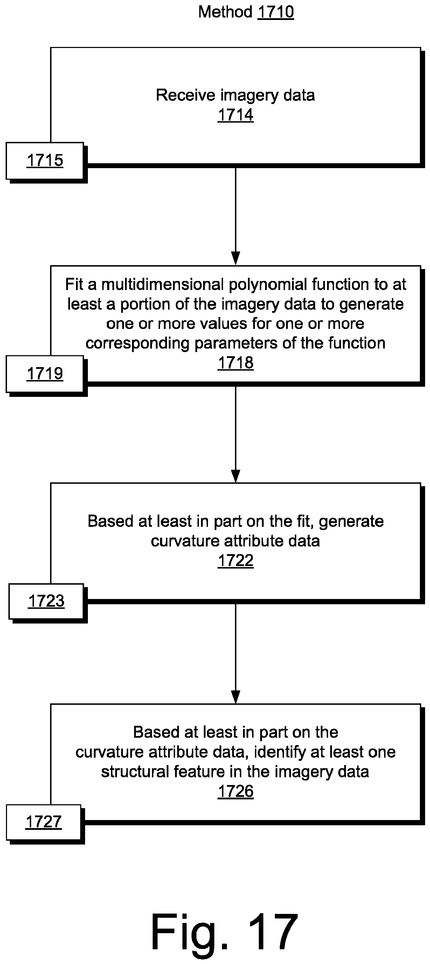

Fig. 17 shows an example of a method 1710 that includes a reception block 1714 for receiving imagery data, a fit block 1718 for fitting a multidimensional polynomial function to at least a portion of the imagery data to generate one or more values for one or more corresponding parameters of the function; a generation block 1722 for generating curvature attribute data based at least in part on the fitting; and an optional identification block 1726 for identifying at least one structural feature in the imagery data based at least in part on the curvature attribute data.

The method 1710 is shown in Fig. 17 in association with various computer-readable media (CRM) blocks 1715, 1719, 1723 and 1727. Such blocks generally include instructions suitable for execution by one or more processors (or cores) to instruct a computing device or system to perform one or more actions. While various blocks are shown, a single medium may be configured with instructions to allow for, at least in part, performance of various actions of the method 1710. As an example, a computer-readable medium (CRM) may be a computer-readable storage medium. A computer-readable storage medium is not transitory, not a signal and not a carrier wave.

As an example, imagery data can be or can include seismic data. As an example, imagery data can be medical imagery data from a machine such as an ultrasound machine, an X-ray machine, a nuclear magnetic resonance machine (e.g., MRI) or another type of medical imaging machine. As an example, imagery data can be satellite imagery data. As an example, imagery data can be photographic imagery data. As an example, imagery data can be microwave imagery data. As an example, imagery data can be infrared imagery data. As an example, imagery data can be meteorological imagery data (e.g., cloud data, wind data, rain data, snow data, etc.).

As an example, imagery data can be data that is based at least in part on sensed data. For example, a receiver can receive energy where such energy can be recorded with respect to a dimension or dimensions of an object, a portion of an object, etc. Such data may be processed and can be processed imagery data, which is a type of imagery data. As an example, seismic data can be seismic attribute data.

As an example, imagery data can be pixel data where each pixel has corresponding dimensions. As an example, each of the corresponding dimensions can exceed approximately 5 meters. For example, for seismic data that is multidimensional, in a plane, the seismic data can be organized as pixels where each pixel has a dimension that exceeds approximately 5 meters.

As an example, imagery data can be seismic data that includes seismic amplitude data and where a method can include fitting a multidimensional polynomial function to the seismic amplitude data.

As an example, a method can include generating filtered imagery data based at least in part on fitting a multidimensional polynomial function to the imagery data. As an example, a filter size may be selected where the filter size is based at least in part on a feature size of a structure in imagery data.

As an example, a multidimensional polynomial function can include a number of parameters as unknowns where fitting can include utilizing a window size that encompasses a number of samples of the imagery data that is equal to or greater than the number of parameters.

As an example, a multidimensional polynomial function can be a two-dimensional polynomial function. As an example, a multidimensional polynomial function can include six parameters as unknowns. As an example, a multidimensional polynomial function can be $z(x,y) = ax^2 + by^2 + cxy + dx + ey + f$ where $x$ and $y$ are coordinates of a Cartesian coordinate system and where a, $b, c, d$, e, and $f$ are the parameters of the function.

As an example, imagery data can include seismic data and a method can include generating filtered seismic data based at least in part on the fitting to attenuate acquisition footprint noise in the seismic data.

As an example, a method can include least-squares fitting that fits a multidimensional polynomial to at least a portion of imagery data.

As an example, a method can include identifying at least one structural feature in imagery data based at least in part on curvature attribute data.

As an example, a system can include a processor; memory operatively coupled to the processor; and processor-executable instructions stored in the memory to instruct the system to: receive imagery data; fit a multidimensional polynomial function to at least a portion of the imagery data to generate one or more values for one or more corresponding parameters of the function; and generate curvature attribute data based at least in part on the fitting. In such an example, the imagery data can include seismic data.

As an example, a system can include a multidimensional polynomial function that can be $z(x,y) = ax^2 + by^2 + cxy + dx + ey + f$ where $x$ and $y$ are coordinates of a Cartesian coordinate system and where a, $b, c, d$, e, and $f$ are the parameters of the function.

As an example, one or more computer-readable storage media can include computer-executable instructions to instruct a computing system where the instructions include instructions to: receive imagery data; fit a multidimensional polynomial function to at least a portion of the imagery data to generate one or more values for one or more corresponding parameters of the function; and generate curvature attribute data based at least in part on the fitting. In such an example, the imagery data can be or can include seismic data.

As an example, a method can include identifying one or more structures in seismic data of geologic environment. For example, consider one or more of identifying a fault or faults, mapping a fault or faults, separating a fault or faults. As an example, a method can include fault mapping that maps faults in a geologic environment based at least in part on curvature attribute data. As an example, a method can include fault separating that separates faults in a geologic environment based at least in part on curvature attribute data.

As shown in the example plots of Fig. 13, received imagery data as in the plot 1310 can be processed to generate curvature attribute data as in the plot 1320, specifically curvature of the input imagery data of the plot 1310. In the plot 1320, linear features are highlighted by attenuating other features.

As shown in the example plots of Fig. 14, received imagery data as in the plot 1410 can be processed to generate curvature attribute data as in the plot 1420, where an analytic function is utilized to calculate the azimuth of lineaments relative to a direction (north) for faults in the imagery data.

As shown in Fig. 15, the example plot 1520 shows curvature attribute data, particularly data calculated as to the azimuth of lineaments, for example, direction of stronger (e.g., higher) curvature. As an example, a method can include determining geographical direction of discontinuities such as faults.

As an example, a method can include receiving seismic data; fitting a multidimensional polynomial function to at least a portion of the seismic data to generate one or more values for one or more corresponding parameters of the function; and, based at least in part on the fitting, outputting information. In such an example, the method can include receiving seismic data that includes seismic amplitude data where the fitting includes fitting the multidimensional polynomial function to the seismic amplitude data. As an example, seismic data may be or include seismic attribute data.

As an example, a method can include generating filtered seismic data based at least in part on fitting of a multidimensional polynomial function to seismic data. As an example, a method can include generating curvature attribute data based at least in part on fitting of a multidimensional polynomial function to seismic data.

As an example, a multidimensional polynomial function can include a number of parameters as unknowns and fitting can include utilizing a window size that encompasses a number of samples of seismic data that is equal to or greater than the number of parameters.

As an example, a multidimensional polynomial function can be a two-dimensional polynomial function. As an example, a multidimensional polynomial function can include six parameters as unknowns. As an example, a multidimensional polynomial function can be: be $z(x,y) = ax^2 + by^2 + cxy + dx + ey + f$ where $x$ and $y$ are coordinates of a Cartesian coordinate system and where $a$, $b$, $c$, $d$, $e$, and $f$ are the parameters of the function.

As an example, a function may be specified in a Cartesian coordinate system and/or in another type of coordinate system (e.g., cylindrical, etc.).

As an example, a method can include generating filtered seismic data based at least in part on filtering to attenuate acquisition footprint noise in seismic data.

As an example, seismic data may be a seismic volume (e.g., a seismic cube). As an example, a method can include performing fitting on a plurality of 2D slices of seismic data, optionally independently. In such an example, a method may include performing fitting in parallel and/or in series using one or more processor cores. As an example, a method can include least-squares fitting.

As an example, a system can include one or more processors for processing information; memory operatively coupled to the one or more processors; and modules that include instructions stored in the memory and executable by at least one of the one or more processors, where the modules include a reception module that receives seismic data; a fitting module that fits a multidimensional polynomial function to at least a portion of the seismic data generate one or more values for one or more corresponding parameters of the function; and an output module that, based at least in part on fitting, outputs information. In such an example, the fitting module can be or include a least-squares fitting module.

As an example, one or more computer-readable storage media can include computer-executable instructions to instruct a computing system where the instructions include instructions to: receive data where the data includes seismic data or seismic attribute data; fit a multidimensional polynomial function to at least a portion of the data to generate one or more values for one or more corresponding parameters of the function; and output information. In such an example, the output information can include filtered data. As an example, seismic data can include seismic amplitude data where fitting fits a function to at least a portion of the seismic amplitude data.

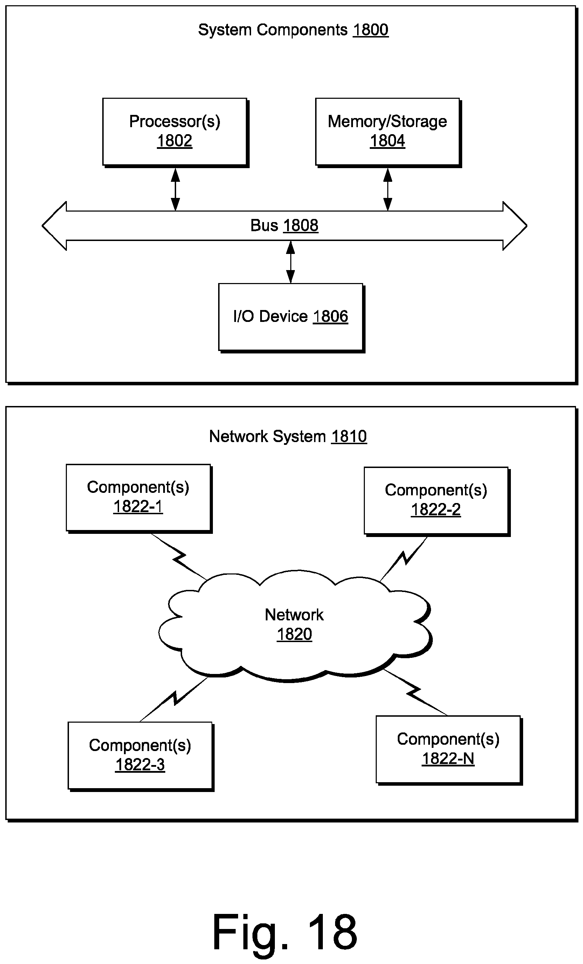

Fig. 18 shows components of an example of a computing system 1800 and an example of a networked system 1810. The system 1800 includes one or more processors 1802, memory and/or storage components 1804, one or more input and/or output devices 1806 and a bus 1808. In an example embodiment, instructions may be stored in one or more computer-readable media (e.g., memory/storage components 1804). Such instructions may be read by one or more processors (e.g., the processor(s) 1802) via a communication bus (e.g., the bus 1808), which may be wired or wireless. The one or more processors may execute such instructions to implement (wholly or in part) one or more attributes (e.g., as part of a method). A user may view output from and interact with a process via an I/O device (e.g., the device 1806). In an example embodiment, a computer-readable medium may be a storage component such as a physical memory storage device, for example, a chip, a chip on a package, a memory card, etc. (e.g., a computer-readable storage medium).

In an example embodiment, components may be distributed, such as in the network system 1810. The network system 1810 includes components 1822-1, 1822-2, 1822-3, ... 1822-N. For example, the components 1822-1 may include the processor(s) 1802 while the component(s) 1822-3 may include memory accessible by the processor(s) 1802. Further, the component(s) 1802-2 may include an I/O device for display and optionally interaction with a method. The network may be or include the Internet, an intranet, a cellular network, a satellite network, etc.

As an example, a device may be a mobile device that includes one or more network interfaces for communication of information. For example, a mobile device may include a wireless network interface (e.g., operable via IEEE 802.11, ETSI GSM, BLUETOOTH®, satellite, etc.). As an example, a mobile device may include components such as a main processor, memory, a display, display graphics circuitry (e.g., optionally including touch and gesture circuitry), a SIM slot, audio/video circuitry, motion processing circuitry (e.g., accelerometer, gyroscope), wireless LAN circuitry, smart card circuitry, transmitter circuitry, GPS circuitry, and a battery. As an example, a mobile device may be configured as a cell phone, a tablet, etc. As an example, a method may be implemented (e.g., wholly or in part) using a mobile device. As an example, a system may include one or more mobile devices.

As an example, a system may be a distributed environment, for example, a so-called "cloud" environment where various devices, components, etc. interact for purposes of data storage, communications, computing, etc. As an example, a device or a system may include one or more components for communication of information via one or more of the Internet (e.g., where communication occurs via one or more Internet protocols), a cellular network, a satellite network, etc. As an example, a method may be implemented in a distributed environment (e.g., wholly or in part as a cloud-based service).

As an example, information may be input from a display (e.g., consider a touchscreen), output to a display or both. As an example, information may be output to a projector, a laser device, a printer, etc. such that the information may be viewed. As an example, information may be output stereographically or holographically. As to a printer, consider a 2D or a 3D printer. As an example, a 3D printer may include one or more substances that can be output to construct a 3D object. For example, data may be provided to a 3D printer to construct a 3D representation of a subterranean formation. As an example, layers may be constructed in 3D (e.g., horizons, etc.), geobodies constructed in 3D, etc. As an example, holes, fractures, etc., may be constructed in 3D (e.g., as positive structures, as negative structures, etc.).

**Claims**

1.  A computer-implemented method comprising:

    receiving imagery data (1174); fitting a multidimensional polynomial function (1719) to at least a portion of the imagery data to generate one or more values for one or more corresponding parameters of the function; generating curvature attribute data (1722) based at least in part on the fitting; and, generating filtered imagery data based at least in part on the fitting, wherein the imagery data comprises seismic data.

2.  The method of claim 1 wherein the seismic data comprises seismic attribute data.

3.  The method of claim 1 wherein the imagery data comprises pixel data wherein each pixel comprises corresponding dimensions.

4.  The method of claim 3 wherein each of the corresponding dimensions exceeds approximately 5 meters.

5.  The method of claim 1 wherein the seismic data comprises seismic amplitude data and wherein the fitting comprises fitting the multidimensional polynomial function to the seismic amplitude data.

6.  The method of claim 1 wherein the multidimensional polynomial function comprises a number of parameters as unknowns and wherein the fitting comprises utilizing a window size that encompasses a number of samples of the imagery data that is equal to or greater than the number of parameters.

7.  The method of claim 1 wherein the multidimensional polynomial function comprises a two-dimensional polynomial function.

8.  The method of claim 1 wherein the multidimensional polynomial function comprises six parameters as unknowns.

9.  The method of claim 1 wherein the multidimensional polynomial function is $z(x,y) = ax^2 + by^2 + cxy + dx + ey + f$ where $x$ and $y$ are coordinates of a Cartesian coordinate system and wherein $a,b,c,d,e,$ and $f$ are the parameters of the function.

10. The method of claim 1 comprising generating filtered seismic data based at least in part on the fitting to attenuate acquisition footprint noise in the seismic data.

**11.** The method of claim 1 wherein the fitting comprises least-squares fitting.

**12.** The method of claim 1 comprising identifying at least one structural feature in the imagery data based at least in part on the curvature attribute data.

**13.** A system comprising:

a processor (756);
memory (758) operatively coupled to the processor; and
processor-executable instructions (770) stored in the memory to instruct the system to:

receive imagery data;
fit a multidimensional polynomial function to at least a portion of the imagery data to generate one or more values for one or more corresponding parameters of the function; and
generate curvature attribute data based at least in part on the fitting.

**Patentansprüche**

**1.** Rechnerimplementiertes Verfahren, umfassend:

Empfangen von Bilddaten (1174);
Fitten einer mehrdimensionalen Polynomfunktion (1719) an zumindest einen Teil der Bilddaten, um einen oder mehrere Werte für einen oder mehrere entsprechende Parameter der Funktion zu erzeugen;
Erzeugen von Krümmungsattributdaten (1722), zumindest teilweise basierend auf dem Fitten; und
Erzeugen von gefilterten Bilddaten zumindest teilweise basierend auf dem Fitten, wobei die Bilddaten seismische Daten umfassen.

**2.** Verfahren nach Anspruch 1, wobei die seismischen Daten seismische Attributdaten umfassen.

**3.** Verfahren nach Anspruch 1, wobei die Bilddaten Pixeldaten umfassen, wobei die Pixel jeweils entsprechende Abmessungen umfassen.

**4.** Verfahren nach Anspruch 3, wobei die entsprechenden Abmessungen jeweils ungefähr 5 Meter überschreiten.

**5.** Verfahren nach Anspruch 1, wobei die seismischen Daten seismische Amplitudendaten umfassen und wobei das Fitten ein Fitten der mehrdimensionalen Polynomfunktion an die seismischen Amplitudendaten umfasst.

**6.** Verfahren nach Anspruch 1, wobei die mehrdimensionale Polynomfunktion eine Anzahl von Parametern als Unbekannte umfasst und wobei das Fitten ein Verwenden einer Fenstergröße umfasst, die eine Anzahl von Abtastwerten der Bilddaten umfasst, die gleich oder größer als die Anzahl von Parametern ist.

**7.** Verfahren nach Anspruch 1, wobei die mehrdimensionale Polynomfunktion eine zweidimensionale Polynomfunktion umfasst.

**8.** Verfahren nach Anspruch 1, wobei die mehrdimensionale Polynomfunktion sechs Parameter als Unbekannte umfasst.

**9.** Verfahren nach Anspruch 1, wobei die mehrdimensionale Polynomfunktion $z(x, y) = ax^2 + by^2 + cxy + dx + ey + f$ ist, wobei $x$ und $y$ Koordinaten eines kartesischen Koordinatensystems sind und wobei $a, b, c, d, e,$ und $f$ die Parameter der Funktion sind.

**10.** Verfahren nach Anspruch 1, umfassend ein Erzeugen gefilterter seismischer Daten zumindest teilweise basierend auf dem Fitten, um "Akquisition-Footprint"-Rauschen in den seismischen Daten zu dämpfen.

**11.** Verfahren nach Anspruch 1, wobei das Fitten ein Kleinste-Quadrate-Fitten umfasst.

**12.** Verfahren nach Anspruch 1, umfassend ein Identifizieren zumindest eines Strukturmerkmals in den Bilddaten zumindest teilweise basierend auf den Krümmungsattributdaten.

**13.** System, umfassend:

einen Prozessor (756);
einen mit dem Prozessor wirkgekoppelten Speicher (758); und
prozessorausführbare Anweisungen (770), die im Speicher abgelegt sind, um das System dazu anzuweisen:

Bilddaten zu empfangen;
eine mehrdimensionalen Polynomfunktion an zumindest einen Teil der Bilddaten zu fitten, um einen oder mehrere Werte für einen oder mehrere entsprechende Parameter der Funktion zu erzeugen; und
Krümmungsattributdaten zumindest teilweise basierend auf dem Fitten zu erzeugen.

## Revendications

**1.** Procédé implémenté par ordinateur, comprenant ;

la réception de données d'imagerie (1174) ;
l'ajustement d'une fonction polynomiale multidimensionnelle (1719) à au moins une partie des données d'imagerie pour générer une ou plusieurs valeurs destinées à un ou plusieurs paramètres correspondants de la fonction ;
la génération des données d'attribut de courbure (1722) basées au moins en partie sur l'ajustement ; et
la génération des données d'imagerie filtrées basées au moins en partie sur l'ajustement, dans lequel les données d'imagerie comprennent des données sismiques.

**2.** Procédé selon la revendication 1, dans lequel les données géophysiques comprennent des données d'attribut sismique.

**3.** Procédé selon la revendication 1, dans lequel les données d'imagerie comprennent des données de pixel, dans lequel chaque pixel comprend des dimensions correspondantes.

**4.** Procédé selon la revendication 3, dans lequel chacune des dimensions correspondantes dépasse approximativement 5 mètres.

**5.** Procédé selon la revendication 1, dans lequel les données sismiques comprennent des données d'amplitude sismique et dans lequel l'ajustement comprend l'ajustement de la fonction polynomiale multidimensionnelle aux données d'amplitude sismique.

**6.** Procédé selon la revendication 1, dans lequel la fonction polynomiale multidimensionnelle comprend un certain nombre de paramètres en tant qu'inconnues et dans lequel l'ajustement comprend l'utilisation d'une taille de fenêtre qui englobe un nombre d'échantillons des données d'imagerie qui est égal ou supérieur au nombre de paramètres.

**7.** Procédé selon la revendication 1, dans lequel la fonction polynomiale multidimensionnelle comprend une fonction polynomiale bidimensionnelle.

**8.** Procédé selon la revendication 1, dans lequel la fonction polynomiale multidimensionnelle comprend six paramètres en tant qu'inconnues.

**9.** Procédé selon la revendication 1 dans lequel la fonction polynomiale multidimensionnelle est $z(x, y) = ax^2 + by^2 + cxy + dx + ey + f$ où $x$ et $y$ sont des coordonnées d'un système de coordonnées cartésiennes et dans lequel $a, b, c, d, e$ et $f$ sont les paramètres de la fonction.

**10.** Procédé selon la revendication 1 comprenant la génération de données sismiques filtrées basées au moins en partie sur l'ajustement pour atténuer le bruit d'empreinte d'acquisition dans les données sismiques.

**11.** Procédé selon la revendication 1 dans lequel l'ajustement comprend la réalisation de l'ajustement des moindres carrés.

**12.** Procédé selon la revendication 1 comprenant l'identification d'au moins une caractéristique structurale dans les données d'imagerie basée au moins en partie sur les données d'attribut de courbure.

**13.** Système comprenant :

un processeur (756) ;
une mémoire (758) couplée de manière fonctionnelle au processeur ; des instructions exécutables par processeur (770) mémorisées dans la mémoire pour demander au système :

de recevoir les données d'imagerie ;
d'ajuster une fonction polynomiale multidimensionnelle à au moins une partie des données d'imagerie pour générer une ou plusieurs valeurs destinées à un ou plusieurs paramètres correspondants de la fonction ; et
de générer des données d'attribut de courbure basées au moins en partie sur l'ajustement.

## System 100

**Management Components 110**

| Seismic Data 112 | Other Information 114 |

Processing 116

| Entities 122 | Simulation 120 | Attribute 130 |

| Analysis/ Visualization 142 | Other Workflow 144 |

**Framework 170**

Modules 175

Model Simulation 180

Framework Services 190

Framework Core 195

| Domain Objects 182 |
| Data Source 184 |
| Rendering 186 |
| User Interfaces 188 |

160

Geologic Environment 150
(e.g., sensing, drilling, injecting, extracting, etc.)

155

1000

158

152

156

157

0

159

1000

2000

153

154

3000

151

4000

5000

# Fig. 1

Fig. 2

Method <u>310</u>

Fig. 3

Method 410

Receive Data
414

415

Process Data
418

419

Output
422

423

# Fig. 4

Method
500

```
┌──────────┐
│ Receive  │
│   512    │
└──────────┘
     │
     ▼
┌──────────┐
│ Process  │
│   520    │
└──────────┘
     │
     ▼
┌──────────┐
│  Output  │
│   532    │
└──────────┘


┌──────────┐
│Difference│
│   552    │
└──────────┘
```

# Fig. 5

Method 600

```
┌─────────────────────────┐
│        Calculate        │
│          610            │
└─────────────────────────┘
             │
             ▼
┌─────────────────────────┐
│        Calculate        │
│          620            │
└─────────────────────────┘
             │
             ▼
┌─────────────────────────┐
│   Generate Filtered Data │
│          630            │
└─────────────────────────┘
             │
             ▼
┌──────────────────────────────┐
│ Generate Filtered Attribute Data │
│             640              │
└──────────────────────────────┘
             │
             ▼
┌─────────────────────────┐
│   Calculate Curvature(s) │
│          650            │
└─────────────────────────┘
             │
             ▼
┌─────────────────────────┐
│        Decompose        │
│          660            │
└─────────────────────────┘


┌─────────────────────────┐
│        Calculate        │
│          670            │
└─────────────────────────┘


┌─────────────────────────┐
│   Structural Guidance    │
│          680            │
└─────────────────────────┘
```

# Fig. 6

Fig. 7

Fig. 8

Fig. 9

Fig. 10

1110

1100

$$K = d\omega / dS = 1 / R$$

$$K = \frac{d^2y/dx^2}{(1+(dy/dx)^2)^{3/2}}$$

1120

1130

Fig. 11

1200

$$y = ax^2 + by^2 + cxy + dx + ey + f$$

$$a = \frac{1}{2} \frac{\partial^2 z}{\partial x^2} = \frac{Z_1 + Z_3 + Z_4 + Z_6 + Z_7 + Z_9}{12\Delta x^2} - \frac{Z_2 + Z_5 + Z_8}{6\Delta x^2}$$

$$b = \frac{1}{2} \frac{\partial^2 z}{\partial y^2} = \frac{Z_1 + Z_2 + Z_3 + Z_7 + Z_8 + Z_9}{12\Delta x^2} - \frac{Z_4 + Z_5 + Z_6}{6\Delta x^2}$$

$$c = \frac{\partial^2 z}{\partial x \partial y} = \frac{Z_3 + Z_7 - Z_1 - Z_9}{4\Delta x^2}$$

$$d = \frac{\partial z}{\partial x} = \frac{Z_3 + Z_6 + Z_9 - Z_1 - Z_4 - Z_7}{6\Delta x}$$

$$e = \frac{\partial z}{\partial y} = \frac{Z_1 + Z_2 + Z_3 - Z_7 - Z_8 - Z_9}{6\Delta x}$$

$$f = \frac{2(Z_2 + Z_4 + Z_6 + Z_8) - (Z_1 + Z_3 + Z_7 + Z_9) + 5Z_5}{9}$$

# Fig. 12

Fig. 13

Inline

1410

Crossline

Inline

1420

Crossline

EP 3 359 983 B1

# Fig. 14

Fig. 15

1610

$$\begin{bmatrix} z_1 \\ \vdots \\ z_m \end{bmatrix} = \begin{bmatrix} x_1^2 & y_1^2 & x_1 y_1 & x_1 & y_1 & 1 \\ \vdots & \vdots & \vdots & \vdots & \vdots & \vdots \\ x_m^2 & y_m^2 & x_m y_m & x_m & y_m & 1 \end{bmatrix} \times \begin{bmatrix} a \\ \vdots \\ f \end{bmatrix}$$

1612
$$\mathbb{Y} = \mathbb{A} \cdot \mathbb{X}$$

$$\mathbb{A}^{-1} \cdot \mathbb{Y} = \mathbb{A}^{-1} \mathbb{A} \cdot \mathbb{X}$$

$$\mathbb{X} = \mathbb{A}^{-1} \cdot \mathbb{Y}$$

1614
$$\mathbb{X} = (\mathbb{A}^T \mathbb{A})^{-1} \mathbb{A}^T \cdot \mathbb{Y}$$

$$\mathbb{X} = \mathbb{B} \cdot \mathbb{Y}$$

1616

$$[6 \times m] \times [m \times 1] = [6 \times 1]$$

# Fig. 16

Method 1710

```
┌──────────────────────────────────────────────┐
│                                                │
│              Receive imagery data              │
│                    1714                        │
│  ┌────────┐                                    │
│  │  1715  │                                    │
│  └────────┘                                    │
└──────────────────────────────────────────────┘
                      │
                      ▼
┌──────────────────────────────────────────────┐
│    Fit a multidimensional polynomial function  │
│    to at least a portion of the imagery data   │
│    to generate one or more values for one or   │
│    more corresponding parameters of the        │
│    function                                    │
│                    1718                        │
│  ┌────────┐                                    │
│  │  1719  │                                    │
│  └────────┘                                    │
└──────────────────────────────────────────────┘
                      │
                      ▼
┌──────────────────────────────────────────────┐
│    Based at least in part on the fit, generate │
│            curvature attribute data            │
│                    1722                        │
│  ┌────────┐                                    │
│  │  1723  │                                    │
│  └────────┘                                    │
└──────────────────────────────────────────────┘
                      │
                      ▼
┌──────────────────────────────────────────────┐
│             Based at least in part on the      │
│    curvature attribute data, identify at least │
│      one structural feature in the imagery data│
│                    1726                        │
│  ┌────────┐                                    │
│  │  1727  │                                    │
│  └────────┘                                    │
└──────────────────────────────────────────────┘
```

# Fig. 17

System Components 1800

Processor(s)
1802

Memory/Storage
1804

Bus 1808

I/O Device 1806

Network System 1810

Component(s)
1822-1

Component(s)
1822-2

Network
1820

Component(s)
1822-3

Component(s)
1822-N

# Fig. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62238259

**Non-patent literature cited in the description**

- **ANDY ROBERTS.** Curvature attributes and their application to 3D interpreted horizons. *First break,* 02 February 2001, vol. 19 (2), 85-100

- **ROBERTS, A.** Curvature attributes and their application to 3D interpreted horizons. *First Break,* 2001, vol. 19, 85-100